# EUROPEAN PATENT SPECIFICATION

(11) **EP 2 843 285 B1**
(45) Date of publication and mention of the grant of the patent: **13.09.2017**
(21) Application number: 13781099.0
(22) Date of filing: 26.04.2013
(51) Int. Cl.: F16L 19/08, F16L 21/08, F16L 55/10, F16L 57/00, F16L 19/10, F16L 19/12, F25B 41/00

(54) **PIPE JOINT AND CLOSING VALVE**
ROHRANSCHLUSS UND SCHLIESSVENTIL
RACCORD DE TUYAU ET ROBINET DE FERMETURE

(30) Priority: 27.04.2012 JP 2012103669; 27.04.2012 JP 2012103673; 27.04.2012 JP 2012103676; 21.03.2013 JP 2013057568; 21.03.2013 JP 2013057571; 21.03.2013 JP 2013057573
(43) Date of publication of application: 04.03.2015
(73) Proprietor: Nasco Fitting CO., LTD., Aichi 455-0053 (JP); Chiyoda Kuchokiki Co., Ltd., Osaka 599-8247 (JP)
(72) Inventor: MIZUGUCHI, Norio, Nagoya-shi Aichi 455-0053 (JP); SASAYAMA, Takashi, Nagoya-shi Aichi 455-0053 (JP); ITO, Yoshihiro, Nagoya-shi Aichi 455-0053 (JP); OZAKI, Shinji, Sakai-shi Osaka 599-8247 (JP); DOI, Chisako, Sakai-shi Osaka 599-8247 (JP)
(74) Representative: Müller-Boré & Partner Patentanwälte PartG mbB
(86) International application number: PCT/JP2013/062416
(87) International publication number: WO 2013/162006

(56) References cited:
- EP-A1- 2 302 274
- WO-A1-2008/072470
- BE-A- 460 074
- GB-A- 926 201
- JP-A- 2001 108 170
- JP-A- 2003 232 474
- JP-A- 2005 325 872
- JP-A- 2005 337 326
- JP-A- 2007 292 128
- JP-U- S5 369 015

## Description

### Technical Field

The present invention relates to a pipe joint and a closing valve.

### Background Art

In a heat exchanger such as an air conditioner, refrigerant is caused to flow along a circulation passage constructed by connecting between heat exchanging units by a pipe. Closing valves are provided for connecting the heat exchanging units to the pipe. The closing valve includes a housing formed with a flow path of the refrigerant, a valve function unit opening and closing the flow path and a pipe joint (a joint function unit) for connecting a pipe.

One of existing pipe joints includes a cylindrical joint body which constitutes one end of the flow path and is formed with a tapered sealing surface. The existing pipe joint is structured so that a connecting end of the pipe which is deformed so as to be diametrically enlarged into a flared shape is caused to adhere to the tapered sealing surface and is tightened by a nut. However, the connecting structure by the tapered sealing surface and the flared connecting end is easy to cause leakage of refrigerant (Freon gas or the like). Since leakage of refrigerant causes destruction of global environment such as global warming and destruction of ozone layer, a countermeasure against refrigerant leakage is a momentous issue.

The applicant proposed a closing valve disclosed in Patent Document 1 as the closing valve provided with a pipe joint which dramatically reduces an amount of refrigerant leakage. This pipe joint includes a cylindrical joint body constituting one end of the flow path, a cylindrical clamping member screwed into the joint body, a metal ferrule surrounding a pipe inserted into the clamping member and the joint body, and a diameter reducing unit.

The diameter reducing unit has a tapered surface whose diameter is reduced in the pipe insertion direction. When the clamping member is screw-inserted, the ferrule is deformed in the diameter-reducing direction by the tapered surface thereby to airtightly adhere to the inner periphery of the joint body and to bite into an outer periphery of the pipe with its free movement being prevented and to also airtightly adhere to the outer periphery of the pipe. Thus, the structure of connecting the pipe with the ferrule being diameter-reduced is exceedingly effective from the point of prevention of refrigerant leakage.

### Prior Art Document

### Patent Documents

Patent Document 1: Japanese Patent Application Publication No. JP-A-2005-325872

EP 2302274 A1 discloses a pipe coupling structure including a fitting main body attached to a pipe, a coupling member threaded to the fitting main body, a ferrule formed separately from the fitting main body and the coupling member, a pipe coupling portion provided on the coupling member so as to be threaded to the fitting main body, a gripping portion provided on the coupling member to be gripped with a common fastening tool.

BE 460074 A discloses a pipe junction device including a tubular j unction piece receiving an end of a pipe, an integral lip formed on a solid ring, a ring, a nut having internal threads, and a sleeve. The lip is intended to cooperate with a sharp end face of the sleeve. The junction piece is drilled conically thereby to have a flared bore, and the ring is an externally conical jam for entering the bore. The sleeve has a diameter slightly smaller than an inner diameter of the thread, so that the sleeve can be accommodated in the nut by the threaded end thereof.

### Summary of the Invention

### Problem to Be Overcome By the Invention

The clamping member is screwed using a general-purpose tool such as a spanner or an adjustable wrench thereby to be mounted to the joint body in the above-described pipe joint. Accordingly, the clamping member is likely to be turned in the loosening direction by mistake. In this case, there is a concern that the sealing performance of the ferrule would be reduced with the result of refrigerant leakage.

Further, a business transaction is performed regarding the above-described pipe joint with the clamping member being slightly screwed into the joint body. Accordingly, there is a concern that the clamping member may loosen to come off from the joint body while the pipe joint is conveyed or when the worker handles the pipe joint.

The first invention was made in view of the above-described circumstances and an object thereof is to improve the reliability of sealing performance. Further, an object of the second invention is to prevent the clamping member from coming off.

### Means for Overcoming the Problem

A pipe joint of a first invention which includes a cylindrical joint body into which a pipe is inserted and which is configured to be capable of communicating with a refrigerant flow path of a heat exchanging unit, a cylindrical clamping member mounted to the joint body by screwing and a ferrule receiving an axial pressing force from the clamping member screwed in a clamping direction, thereby airtightly sealing a gap between an inner periphery of the joint body and an outer periphery of the pipe, is characterized by a cylindrical fixing member constructing the clamping member and abutting against the ferrule to impart a pressing force to the ferrule, a clamping nut constructing the clamping member and having an outer periphery formed with a non-circular fitting portion, the clamping nut receiving a screw-in force in the clamping direction, thereby imparting to the fixing member a pressing force to the ferrule side, and a locking unit preventing the fixing member from displacement in a direction such that the ferrule is released from the pressing force applied by the fixing member. The locking unit includes a cover which is configured to surround the fixing member and is rotatable relative to the fixing member.

A closing valve of the invention which includes a housing mounted to a heat exchanging unit, a refrigerant flow path formed in the housing, a valving element opening and closing the flow path, a cylindrical joint body into which a pipe is inserted and which is configured to be capable of communicating with a refrigerant flow path of a heat exchanging unit, a cylindrical clamping member mounted to the joint body by screwing and a ferrule receiving an axial pressing force from the clamping member screwed in a clamping direction, thereby airtightly sealing a gap between an inner periphery of the joint body and an outer periphery of the pipe, is characterized by a cylindrical fixing member constructing the clamping member and abutting against the ferrule to impart a pressing force to the ferrule, a clamping nut constructing the clamping member and having an outer periphery formed with a non-circular fitting portion, the clamping nut receiving a screw-in force in the clamping direction, thereby imparting to the fixing member a pressing force to the ferrule side, and a locking unit preventing the fixing member from displacement in a direction such that the ferrule is released from the pressing force applied by the fixing member. The locking unit includes a cover which is configured to surround the fixing member and is rotatable relative to the fixing member.

A pipe joint of a comparative example which includes a cylindrical joint body into which a pipe is inserted and which is configured to be capable of communicating with a refrigerant flow path of a heat exchanging unit, a cylindrical clamping member mounted to the joint body by screwing and a ferrule receiving an axial pressing force from the clamping member screwed in a clamping direction, thereby airtightly sealing a gap between an inner periphery of the joint body and an outer periphery of the pipe, is characterized by a disengagement preventing member which prevents the clamping member from disengaging from the joint body when the clamping member applies no pressing force to the ferrule.

A closing valve of the comparative example which includes a housing mounted to a heat exchanging unit, a refrigerant flow path formed in the housing, a valving element opening and closing the flow path, a cylindrical joint body into which a pipe is inserted and which is configured to be capable of communicating with a refrigerant flow path of a heat exchanging unit, a cylindrical clamping member mounted to the joint body by screwing and a ferrule receiving an axial pressing force from the clamping member screwed in a clamping direction, thereby airtightly sealing a gap between an inner periphery of the joint body and an outer periphery of the pipe, is characterized by a disengagement preventing member which prevents the clamping member from disengaging from the joint body when the clamping member applies no pressing force to the ferrule.

### Effect of the Invention

According to the pipe joint and the closing valve of the invention, when the tool is fitted into the fitting portion to screw the clamping nut in the clamping direction, the ferrule is pressed by the fixing member so that a gap between the inner periphery of the joint body and the outer periphery of the pipe is airtightly sealed with the result that the flow path and the pipe are connected to each other. The fixing member is prevented from displacement in the direction such that the ferrule is released from the press. Accordingly, even when the clamping nut is turned in the loosening direction with the pipe in the connected state, the sealing state by the ferrule is maintained. Thus, according to the invention, the pipe joint is superior in the sealing performance. Further, the outer periphery of the fixing member is surrounded by the rotatable cover. Accordingly, even when the general-purpose tool is fitted with an outer periphery of the cover, only the cover rotates idly with the result that the fixing member can reliably be prevented from being displaced in a loosening direction.

According to the pipe joint and the closing valve of the comparative example, the disengagement preventing member is provided. Even when an external force acts on the clamping member in the loosening direction while the ferrule is not pressed by the clamping member, the clamping member is not disengaged from the joint body.

### Brief Description of the Drawings

Fig. 1 is a sectional view of the pipe joint of embodiment 1, showing the state where a disengagement preventing member is mounted on the housing;
Fig. 2 is a sectional view of the pipe joint, showing the 20 state where the loosened clamping nut is prevented from disengagement from the joint body by the disengagement preventing member;
Fig. 3 is a sectional view of the pipe joint, showing the state where the disengagement preventing member is detached from 25 the housing;
Fig. 4 is a sectional view of the pipe joint, showing the state where the pipe inserted into the joint body is held;
Fig. 5 is a sectional view of the pipe joint, showing the state where the pipe is correctly connected to the pipe joint;
Fig. 6 is a sectional view of the pipe joint, showing the case where the fixing member is not loosened even when the clamping nut has come off in the state where the pipe is connected to the pipe joint;
Fig. 7 is a sectional view of the pipe joint, showing the state where the clamping nut is detached and the cover is moved rearward and the loosening tool is inserted into the pipe;
Fig. 8 is a sectional view of the pipe joint, showing the state where the loosening tool is screwed into the fixing member;
Fig. 9 is a sectional view of the pipe joint, showing the state where the fixing member is detached from the joint body by the loosening tool;
Fig. 10 is a sectional view of a locking member;
Fig. 11 is a rear view of the loosening tool;
Fig. 12 is a sectional view of the pipe joint of embodiment 2, showing the state where the pipe is connected to the pipe joint;
Fig. 13 is a sectional view of the pipe joint, showing the state where the clamping nut and the cover have been detached from the fixing member;
Fig. 14 is a sectional view of the pipe joint of embodiment 3, showing the state where the pipe is connected to the pipe joint;
Fig. 15 is a sectional view of the pipe joint, showing the state where the clamping nut and the cover have been detached from the fixing member;
Fig. 16 is a sectional view of the pipe joint of embodiment 4, showing the state where the clamping nut and the cover have been detached from the fixing member;
Fig. 17 is a sectional view of the pipe joint of embodiment 5, showing the state where the clamping nut and the cover have been detached from the fixing member;
Fig. 18 is a sectional view of the pipe joint of embodiment 6, showing the state where the clamping nut and the cover have been detached from the fixing member;
Fig. 19 is a sectional view of the pipe joint of embodiment 7, showing the state where the pipe is connected to the pipe joint;

### Mode for Carrying Out the Invention

In each of the pipe joint and the closing valve of the invention, the fixing member may have a cross-section surface shaped into a perfect circle, whereby the locking unit is configured.

According to this construction, the fixing member cannot be displaced even using a general-purpose tool since the outer periphery of the fixing member has the shape of a perfect circle.

In each of the pipe joint and the closing valve of the invention, the locking unit may include a biting structure of metals between the joint body and the ferrule and a biting structure of metals between the ferrule and the fixing member.

According to the construction, the displacement of the fixing member in the loosening direction can be reliably prevented.

In each of the pipe joint and the closing valve of the invention, the locking structure may include a biting structure of metals between the joint body and the pipe and a
biting structure of metals between the pipe and the ferrule. According to the construction, the displacement of the fixing member in the loosening direction can be reliably prevented.

Each of the pipe joint and the closing valve of the comparative example may have an insertion space into which the pipe is inserted, wherein the disengagement preventing member may include a cylindrical body housed in the insertion space and mounted to the joint body and a stopper configured to come close to the clamping member thereby to be capable of opposing or abutting against the clamping member.

According to the construction, the ferrule can be prevented from being damaged by foreign matter since the foreign matter is blocked from entering the insertion space.

In each of the pipe joint and the closing valve of the comparative example, the cylindrical body may be configured to be mounted to the joint body by screwing, and the cylindrical body and the joint body may have respective threaded portions with a thread pitch and the clamping member and the joint body may have respective threaded portions with a thread pitch differing from the thread pitch of the cylindrical body and the joint body.

According to the construction, even when the clamping member abuts against the stopper while rotating in the loosening direction, the cylindrical body is not rotated. with the clamping member by the difference in the thread pitch. Accordingly, the clamping member can be prevented from disengagement.

Each of the pipe joint and the closing valve of the comparative example may have an insertion space into which the pipe is inserted, wherein the disengagement preventing member may function as a sealing member which prevents a refrigerant in the flow path from leaking outside through the insertion space.

According to the construction, the number of parts can be reduced in this case as compared with the case where the sealing member is provided separately from the disengagement preventing member.

### Embodiment 1

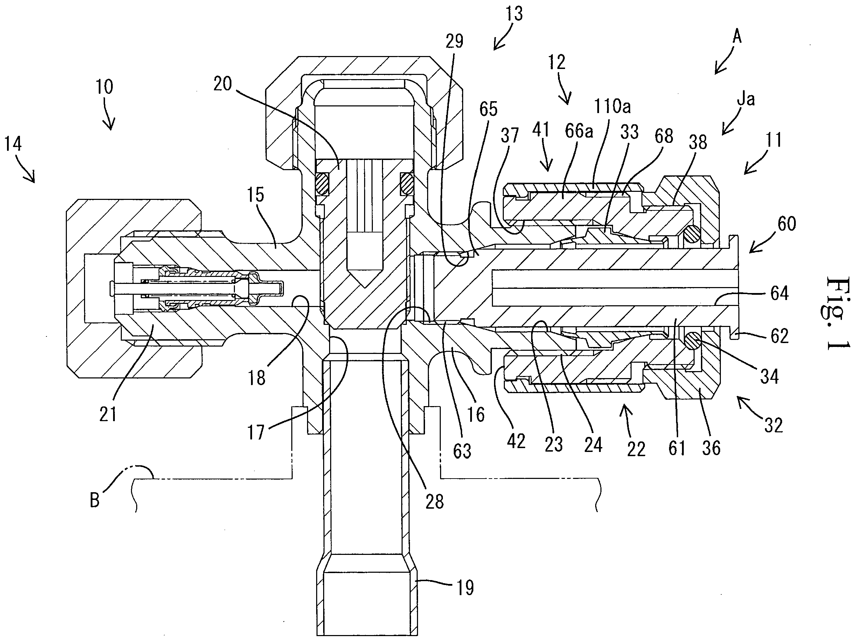

Embodiment 1 of the present invention will be described with reference to Figs. 1 to 11.

### Application of pipe joint Ja

A pipe joint Ja of embodiment 1 is applied to a household air conditioner (a heat exchanger) in which an outdoor unit B as a heat exchanging unit provided with a compressor and a condenser is connected to an indoor unit as a heat exchanging unit (not shown) provided with an expansion valve and an evaporator by a metal (copper or copper alloy) pipe P. A circulation passage is constituted by the outdoor unit B, the indoor unit and the pipe P, and a refrigerant (Freon gas) is circulated through the circulation passage so that heat exchange is carried out. The pipe joint Ja is provided for connecting a closing valve A of the outdoor unit B to the pipe P. The pipe joint Ja is provided integrally with a closing valve A as a joint function unit composing the closing valve A.

### Overall structure of closing valve A

The closing valve A structurally includes a valve body 10 and a lock member 11 as shown in Fig. 1. The closing valve A functionally includes the pipe joint Ja, a first valve function unit 13 and a second valve function unit 14. The pipe joint Ja can function as a single-function pipe joint when being separated from the first and second valve function units 13 and 14.

### Valve body 10

The valve body 10 includes a brass housing 15, the first valve function unit 13 (an on-off valve), the second valve function unit 14 (a service valve) and a joint body 16. In the housing 15 are formed a flow path 17 bent into a substantially L-shape (substantially right angle) and having two ends open in an outer surface of the housing 15 and a branch path 18 which communicates with the flow path 17 and is open in the outer surface of the housing 15. The closing valve A is fixed so as to be exposed in the outer surface of the outdoor unit B. One of the ends of the flow path 17 is airtightly secured to a connecting pipe 19 of a compressor (not shown) of the outdoor unit B by means such as brazing.

When a first valving element 20 of the first valve function unit 13 is manually operated, the first valve function unit 13 is switchable between an open state in which a refrigerant is allowed to flow through the flow path 17 and a closed state in which the refrigerant is disallowed to flow through the flow path 17. Further, when a second valving element 21 of the second valve function unit 14 is manually operated, air can be evacuated from the branch path. 18 and an insertion. space 23 and the pipe P two latter of which communicate with the branch path 18.

### Pipe joint Ja

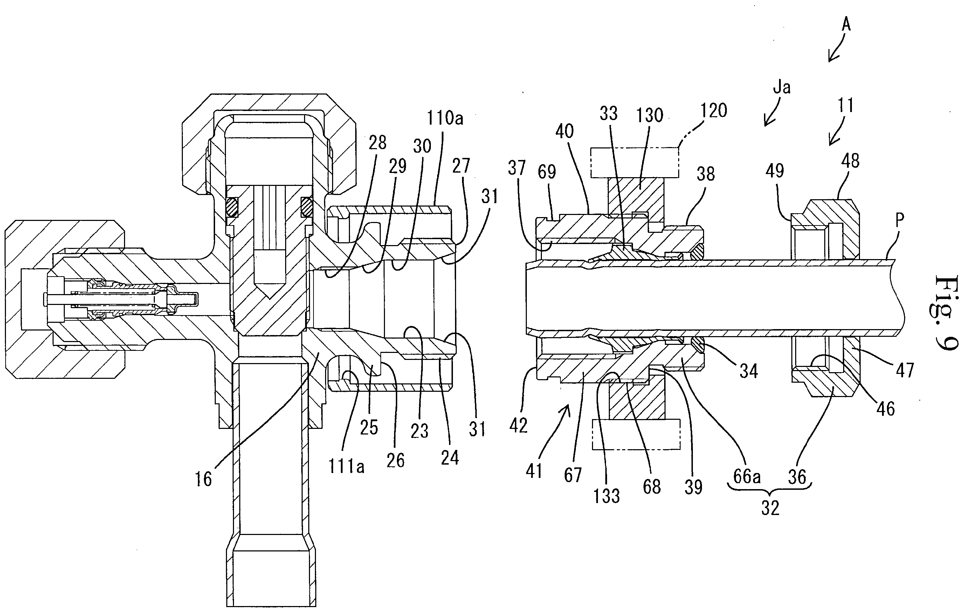

The pipe joint Ja includes the cylindrical joint body 16 and a joint function unit 12 as shown in Figs. 1 and 9. The joint
function unit 12 includes a diameter-reducing unit 22 including a rear tapered surface 31 (see Fig. 9) and the cylindrical lock member 11. The pipe joint Ja has a hollow interior which communicates with an end of the flow path 17 and is open in a rear end surface (distal end surface) of the joint body 16. The interior of the pipe joint Ja serves as the insertion space 23 into which the pipe P is inserted. The joint body 16 is formed integrally with the housing 15 and protrudes from an outer surface of the housing 15 into a cylindrical shape.

In the following description, a direction parallel to an inserting/pulling-out direction of the pipe P into/from the pipe joint Ja (the insertion space 23) is referred to as "front-back direction." The inserting/pulling-out direction of the pipe P is parallel to a direction in which the clamping member 32 is moved while being rotated. Front in the inserting direction of the pipe P into the pipe joint Ja (leftward in Figs. 1 to 10) is referred to as "front". Back in the inserting direction of the pipe P into the pipe joint Ja is referred to as "rear". The front-back. direction is used as a synonym for "axial direction" of the pipe joint Ja (the joint body 16).

A second male thread 24 is formed on the outer periphery of a rear end of the joint body 16. A concentrically circular enlarged diameter portion 25 is formed forward of the second male thread 24 on the outer periphery of the joint body 16. The enlarged diameter portion 25 has a rear end surface which serves as a detection receiving portion 26 comprised of a flat surface perpendicular to an axial direction of the joint body 16. The joint body 16 has a rear end surface which is a flat surface
perpendicular to the inserting/pulling-out direction of the pipe P. The flat surface has an inner peripheral edge (that is, a peripheral edge serving as a boundary between the flat surface and a rear tapered surface 31) formed into a wedge-shaped corner edge 27, as shown in Fig. 9.

An inner peripheral surface of the joint body 16 includes a third female thread 28, a front tapered surface 29, a constant diameter surface 30 and the rear tapered surface 31 sequentially from the front end toward the rear end, as shown in Fig. 9. The front tapered surface 29 is tapered such that the diameter is gradually reduced forward. The front tapered surface 29 has a front end having an inner diameter smaller than an outer diameter of the pipe P and a rear end having an inner diameter slightly larger than the outer diameter of the pipe P. The constant diameter surface 30 has a constant inner diameter from a front end to a rear end. The rear tapered surface 31 has a diameter which is gradually reduced forward. The rear tapered surface 31 has a front end with an inner diameter equal to an inner diameter of the constant diameter surface 30 and a maximum inner diameter of the front tapered surface 29.

### Lock member 11 and clamping member 32

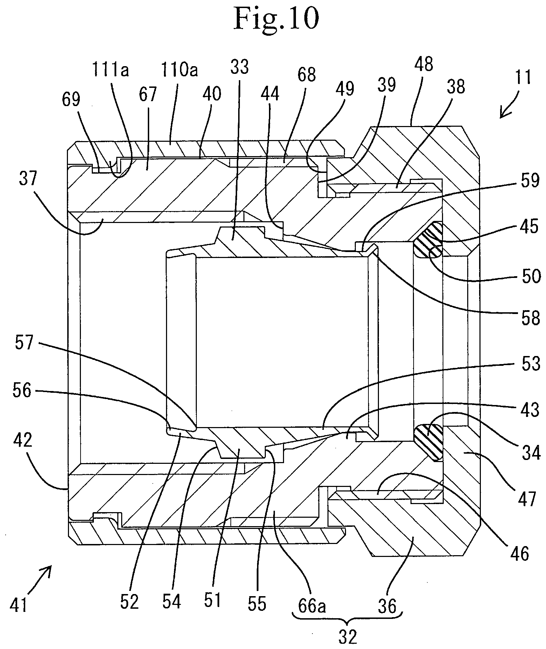

The lock member 11 includes a cylindrical clamping member 32, a cylindrical ferrule 33, a circular elastic ring 34 and cylindrical cover 110a all of which are assembled together, as shown in Fig. 10. The clamping member 32 is composed of two parts, that is, a brass fixing member 66a and a brass clamping nut 36.

### Fixing member 66a

The fixing member 66a has an inner periphery including a front end side region provided with a second female thread 37 formed into a right-hand thread. The right-hand thread is defined as a helical shape such that a member (the fixing member 66a) formed with the right-hand thread is moved forward away from the worker when screwed into a counter member (the second male thread 24 of the joint body 16) while being rotated clockwise (hereinafter referred to as "rotated rightward") as viewed from the worker. The fixing member 66a is externally fitted onto the joint body 16 coaxially from the rear, and the second female thread 37 is fitted to the second male thread 24 and screwed in while being rotated rightward as viewed from the rear, whereby the fixing member 66a is fixed to the joint body 16. Accordingly, the second male thread 24 is a right-hand thread.

The fixing member 66a has an outer peripheral rear end formed with a first male thread 38 which is also a right-hand thread in the same manner as the second female thread 37. A pressure receiving portion 39 is formed on the outer periphery of the fixing member 66a so as to be located forward of the first male thread 38. The pressure receiving portion 39 is formed into the shape of a flat surface perpendicular to the axial direction and faces the rear. The fixing member 66a includes a region that is located forward of the pressure receiving portion 39 and serves as a larger diameter portion 67 having a larger outer diameter than the first male thread 38.

The larger diameter portion 67 has an outer peripheral rear end formed with a loosening male thread 68. The loosening male thread 68 is a left-hand thread contrary to the second female thread 37. The left-hand thread is defined as a helical shape such that a counter member (the loosening female thread 133 of a loosening tool 130 which will be described later) is moved forward away from the worker when screwed into a member formed with the left-hand thread while being rotated counterclockwise (hereinafter referred to as "rotated leftward") as viewed from the worker.

The larger diameter portion 67 includes a region except for a front end thereof and loosening male thread 68. The region serves as a circumferential surface region 40. The circumferential surface region 40 has a cross section which is perpendicular to an axial direction thereof and which is a complete circle. The circumferential surface region 40 has an outer diameter equal to a maximum outer diameter of the loosening male thread 68. The circumferential surface region 40 constitutes a locking unit 41 which prevents the fixing member 66a from being displaced in a direction such that the ferrule 33 is released from a pressed state. The larger diameter portion 67 has an outer peripheral front end formed with a circumferentially positioning groove 69 which is continuous over an entire circumference.

The fixing member 66a has a front end surface (a surface opposed to the detection receiving portion 26 of the joint body 16 in the axial direction) which serves as a flat abutting portion 42 perpendicular to the axial direction. When the fixing member 66a is screwed in the clamping direction and moved axially, the abutting portion 42 comes close to the detection receiving portion 26 and abuts against the detection receiving portion 26 in face-to-face contact.

The fixing member 66a has an inner periphery including a region in the rear of the second female thread 37 as shown in Fig. 10. The region is formed with a lock portion 43 inwardly protruding concentrically over an entire periphery. The inner periphery of the fixing member 66a is formed with a flat pressing surface 44 which is located between the second female thread 37 and the lock portion 43 and faces forward. The pressing surface 44 is perpendicular to the inserting/pulling-out direction of the pipe P and is located opposite the corner edge 27 with a ring-shaped body 51 of the ferrule 33 being interposed therebetween when the fixing member 66a is assembled to the joint body 16. The fixing member 66a has an inner peripheral rear end which is formed with a cutout 45 which is formed into a tapered shape such that a diameter of the cutout 45 is reduced forward. The cutout 45 is open to the rear end surface of the fixing member 66a.

### Clamping nut 36

The clamping nut 36 is formed into the shape of a ring continuous over an entire circumference. The clamping nut 36 has an inner peripheral front end formed with a first female thread 46 which is a right-hand thread. The clamping nut 36, has an inner peripheral rear end formed with a concentric smaller diameter portion 47 having a smaller inner diameter than the first female thread 46. The inner diameter of the smaller diameter portion 47 is equal to or slightly larger than an external diameter of the pipe P. The clamping nut 36 has an outer periphery formed into a regular hexagonal fitting portion 48. A general purpose tool 120 can be fitted with the fitting portion 48. The general purpose tool 120 indicates a tool which is fitted with a regular hexagonal outer periphery and can rotate a member to be fitted, such as a spanner or an adjustable wrench. Further, the clamping nut 36 has a front end surface serving as a pressing portion 49 formed into the shape of a flat surface which is perpendicular to the axial direction and faces forward.

The clamping nut 36 is assembled to the fixing member 66a from the rear while being rotated rightward (in the clamping direction) as viewed from the rear thereby to be screwed into the first male thread 38. When the clamping nut 36 and the fixing member 66a have been assembled together, a retaining groove 50 facing the inner periphery of the clamping member 32 is formed by the cutout 45 and the smaller diameter portion 47.

### Elastic ring 34

The elastic ring 34 is fitted into the retaining groove 50. The elastic ring 34 is made of rubber and formed into an annular shape continuous over an entire circumference. The elastic ring 34 in an elastically non-deformed state has an inner diameter substantially equal to the outer diameter of the pipe P. More specifically, the inner diameter of the elastic ring 34 may be equal to, larger or smaller than the outer diameter of the pipe P.

The clamping nut 36 is located at an initial position before the pipe P is connected to the pipe joint Ja, as shown in Figs. 1 to 3. When the clamping nut 36 is located at the initial position, the elastic ring 34 is not elastically deformed even when in contact with the cutout 45 or the smaller diameter portion 47, or the elastic ring 34 has a small amount of deformation even if elastically deformed. Further, when the clamping nut 36 is located at the initial position, an axial gap is defined between the pressing portion 49 of the clamping nut 36 and the pressure receiving portion 39 of the fixing member 66a, and a gap is also defined between the rear end surface of the fixing member 66a and the front surface of the smaller diameter portion 47, and a gap is also defined between the rear end surface of the fixing member 66a and the front surface of the smaller diameter portion 47.

### Ferrule 33

The ferrule 33 is made of brass and disposed coaxially with the joint body 16 and the clamping member 32 in the hollow interior of the fixing member 66a. The following will describe the form of the ferrule 33 in the case where the pipe P is not connected to the pipe joint Ja (the ferrule 33 is not in contact with the pipe P). The ferrule 33 has a cylindrical shape such that the ferrule 33 surrounds the pipe P inserted into the pipe joint Ja (the insertion space 23). The ferrule 33 has a minimum inner diameter that is larger than the outer diameter of the pipe P and substantially equal to the inner diameter of the constant diameter surface 30.

The ferrule 33 includes a thick ring-shaped body 51, a cylindrical clamping portion 52 which is thinner than the body 51 and extends forward from the body 51, and a holding portion 53 which is thinner than the body 51 and extends rearward from the body 51, as shown in Fig. 10. The body 51 has an outer periphery with a diameter enlarged from outer peripheries of the cylindrical clamping portion 52 and the holding portion 53 so
that outer periphery of the body 51 is stepped. The body 51 has a front surface formed into a seal surface 54 which has an angle approximate to a right angle relative to the axial direction and has a diameter reduced forward. The body 51 has a rear surface formed into a pressure receiving surface 55 which is perpendicular to the axial direction.

The cylindrical clamping portion 52 has an outer peripheral surface inclined so that a diameter thereof is reduced forward. The cylindrical clamping portion 52 has an inner peripheral edge serving as a first biting portion 56. A wedge-shaped second biting portion 57 pointed diagonally forwardly inward is formed on the inner periphery of the cylindrical clamping portion 52 so as to be located to the rearward of the first biting portion 56. The holding portion 53 has a rear end serving as outwardly directed protrusion 58 which extends in a cantilevered shape such that a diameter thereof is enlarged radially outward to the diagonal rearward. The holding portion 53 has an outer surface including a region located forward of the protrusion 58. The region serves as a recess 59 with a smallest. outer diameter of the holding portion 53.

The ferrule 33 is housed into the fixing member 66a from the front before the protrusion 58 is bent radially outward. In this state, when the rear end of the holding portion 53 is bent using a jig (not shown.), the protrusion. 58 and the recess 59 are formed, and the lock portion 43 is engaged with the recess 59 thereby to be locked. The ferrule 33 and the fixing member 66a are assembled together so as to be prevented from disengagement in the front-back direction. The clamping nut 33 is detached
from the fixing member 66a when the protrusion 58 is formed.

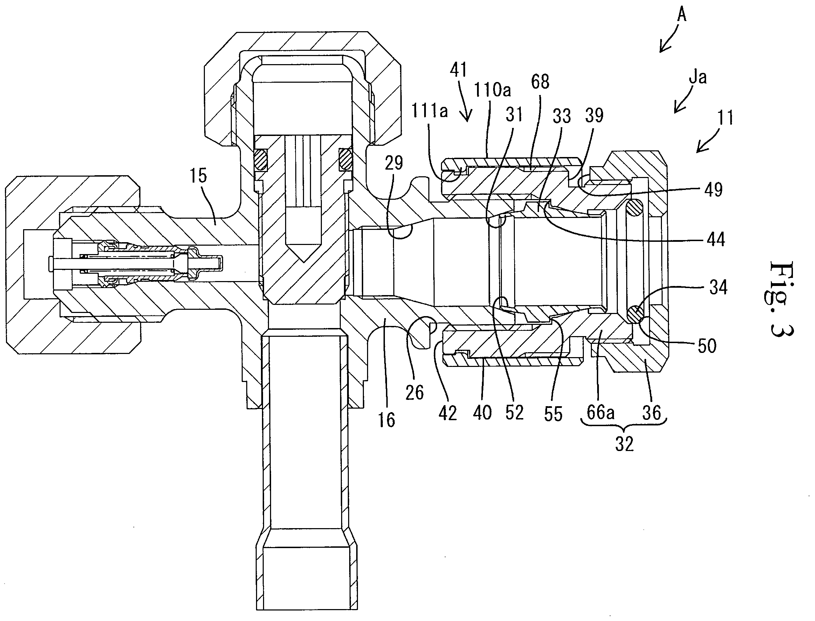

The lock member 11 assembled to the joint body 16 from the rear by threadingly engaging the second female thread 37 with the second male thread 24, as shown in Fig. 1. The second male thread 24 and the second female thread 37 have a larger thread pitch than the first male thread 38 and the first female thread 46. Before the pipe P is connected to the pipe joint Ja, as shown in Fig. 3, the ferrule 33 is not deformed, a gap is defined between the detection receiving portion 26 and the abutting portion 42, a gap is defined between the pressure receiving portion 39 and the pressing portion 49 and a gap is defined between the pressing surface 44 and the pressure receiving surface 55.

### Cover 110a

The cover 110a is made of a synthetic resin and formed into a cylindrical shape as a whole. The cover 110a has a function as a locking unit 41 and a function of protecting the loosening male thread 68. The cover 110a has a front-back dimension that is slightly larger than an overall length of the larger diameter portion 67, as shown in Fig. 10. The cover 110a has an inner diameter that is equal to or slightly larger than that of the larger diameter portion 67 (the maximum outer diameter of the loosening male thread 68 and the circumferential surface region 40). The cover 110a has an inner peripheral front end formed with a circular positioning rib 111a protruding radially inward over a whole circumference.

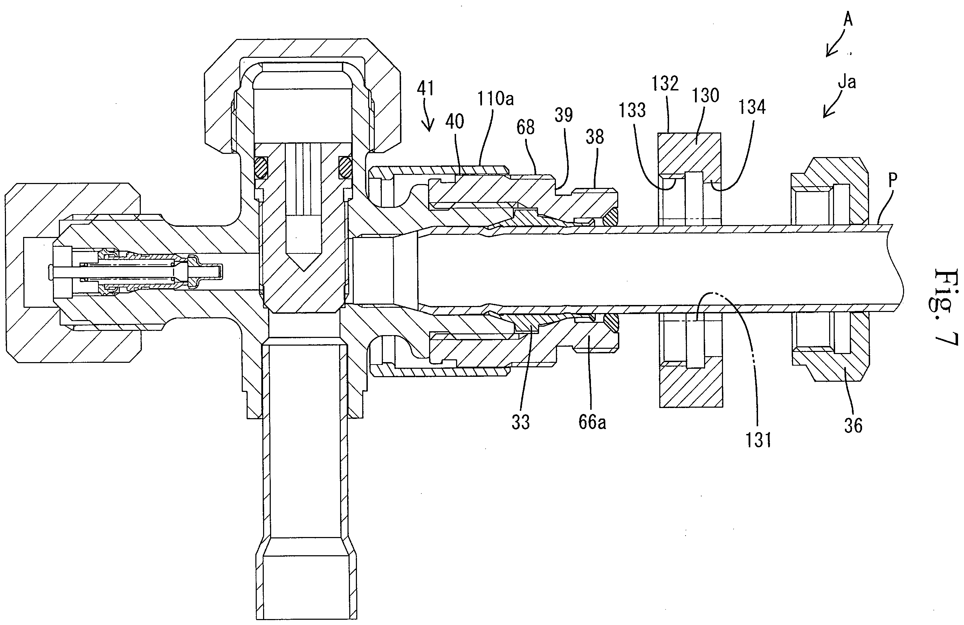

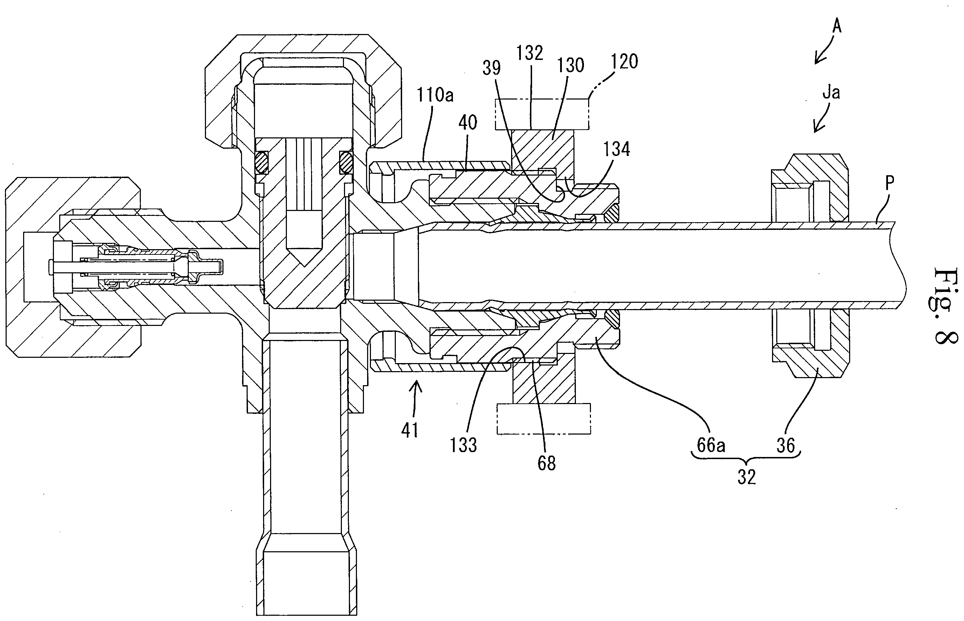

The cover 110a is normally engaged with the positioning groove 69 by the positioning rib 111a thereby to be locked, whereby the cover 110a is held at a protecting position (see Figs. 1 to 6 and 10) where the cover 110a covers a whole region of the loosening male thread 68. The cover 110a located at the protecting position is capable of rotating idly around the fixing member 66a while surrounding the fixing member 66a. Further, since the cover 110a is made of the synthetic resin, the cover 110a is elastically deformable radially. Accordingly, the cover 110a held at the protecting position can be moved from the protecting position to a forward exposed position (see Figs. 7 and 8) when an operating force exceeding the locking force of the positioning rib 111a and the positioning groove 69. When the cover 110a is located at the exposed position, at least the whole loosening male thread 68 of the outer periphery of the larger diameter portion 67 is exposed.

### Loosening tool 130

The loosening tool 130 is dedicated to detaching the pipe P from the pipe joint Ja by releasing the pipe P and the pipe joint Ja from the airtightly sealed state by the ferrule 33 under the condition that the pipe P is connected to the pipe joint Ja by the clamping operation of the clamping nut 36. The loosening tool 130 may be manufactured and distributed as an accessory part or a component part of the pipe joint Ja (the closing valve A) or may be a part sold separately from the pipe joint Ja (the closing valve A).

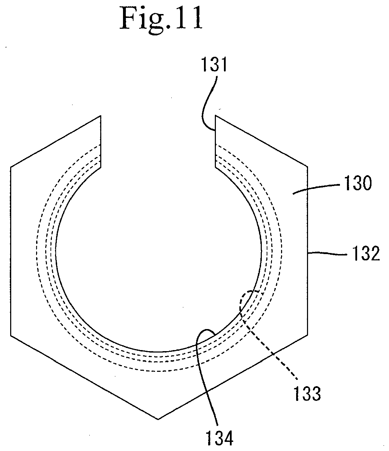

The loosening tool 130 is made of a metal material and formed into a general C-shape as a whole as shown in Fig. 11. The loosening tool 130 has a communication part 131 which is formed by cutting out a part thereof from an inner periphery to an outer periphery so that the communication part 131 communicates between the inner and outer peripheries. The communication part 131 has a circumferential opening which is larger than the outer diameter of the pipe P. The loosening tool 130 has an outer periphery formed with a regular hexagonal loosening fitting part 132. The dedicated tool 120 is fittable with the fitting part 132 as the tool used to turn the clamping nut 36.

The loosening tool 130 has an inner periphery including a front end region formed with a loosening female thread 133. The loosening female thread 133 is a left-hand thread as the loosening male thread 68. Further, the inner periphery of the loosening tool 130 has a rear end formed with a prevention abutting part 134 protruding radially inward into the shape of a rib over a whole circumference. The prevention abutting part 134 has an inner diameter set to be larger than a maximum outer diameter of the first male thread 38 and smaller than the outer diameter of the larger diameter portion 67.

### Disengagement preventing member 60

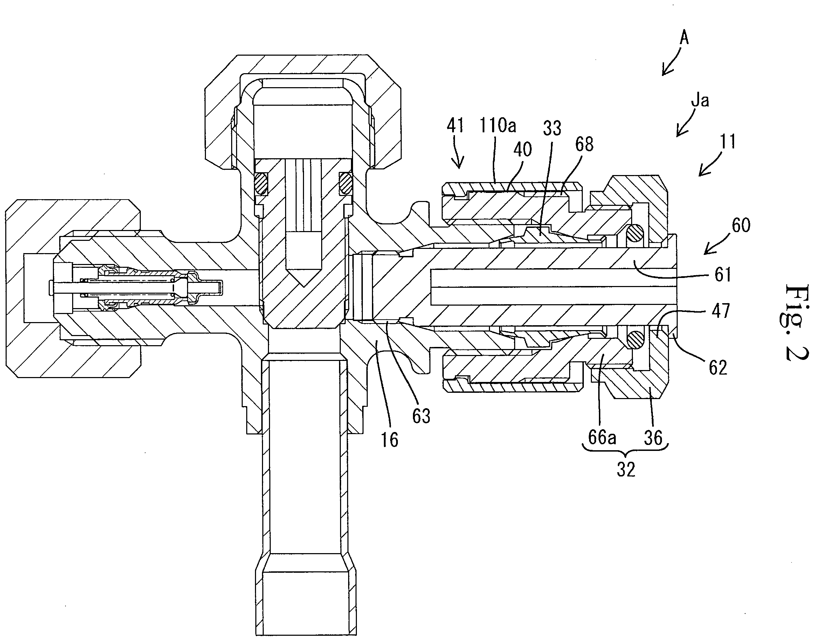

The closing valve A is provided with a disengagement preventing member 60 to prevent the clamping member 32 from loosening to disengage from the joint body 16 before the pipe P is connected to the pipe joint Ja as shown in Figs. 1 and 2. The disengagement preventing member 60 also functions as a sealing member preventing flow of refrigerant in the pipe joint Ja (the insertion space 23). The disengagement preventing member 60 is attachable to and detachable from the pipe joint Ja.

The disengagement preventing member 60 is made of brass and includes a cylindrical body 61, a stopper 62 and a third male thread 63 all of which are formed integrally therewith. The cylindrical body 61 has a regular hexagonal fitting hole 64 which is formed therein and is open in a rear end surface thereof. The cylindrical body 61 has an outer diameter that is smaller than a minimum inner diameter of the ferrule 33 in its undeformed state. The stopper 62 is located on an outer periphery of the rear end of the cylindrical body 61 and formed into the shape of a circular flange concentric with the cylindrical body 61. The stopper 62 has an outer diameter that is larger than an outer diameter of the cylindrical body 61 and an inner diameter of the smaller diameter portion 47 of the clamping nut 36.

The third male thread 63 is formed on an outer periphery of the front end of the cylindrical body 61. The third male and female threads 63 and 28 are right-hand threads as the first male and female threads 38 and 46 and the second male and female threads 24 and 37. The third male and female threads 63 and 28 have a smaller thread pitch than the first male and female threads 38 and 46. The cylindrical body 61 has an outer periphery including a region which is adjacent to the rear of the third male thread 63 and serves as a stepped sealing abutting portion 65 continuous over an entire circumference thereof. The sealing abutting portion 65 has an outer diameter that is larger than a minimum inner diameter of the front end of the front tapered surface 29 and the outer diameter of the third male thread 63.

### Assembly of the pipe joint Ja

The pipe joint Ja will be assembled in the following procedure. The second female thread 37 is threadingly engaged with the second male thread 24 so that the lock member 11 is assembled to the joint body 16 from the rear. In this case, the fixing member 66a is held with fingers to be threadingly engaged clockwise (in the clamping direction) only by hand force without using the general purpose tool 120. Further, the clamping nut 36 is located at an initial position. When the rotation of the fixing member 66a is stopped, the assembly of the lock member 11 is completed with the lock member 11 in a temporarily assembled state.

In the temporarily assembled state, the ferrule 33 is not almost deformed although the front end of the ferrule 33 (the cylindrical clamping portion 52) slightly abuts on the rear tapered surface 31 of the joint body 16, as shown in Fig. 3. Further, the abutting portion 42 of the front end of the lock member 11 departs rearward to be located opposite the detection receiving portion 26 of the joint body 16.

Subsequently, the disengagement preventing member 60 is assembled into the pipe joint Ja (the insertion space 23) from the rear as shown in Fig. 1. In the assembly, the cylindrical body 61 is inserted into the insertion space 23, and the stopper 62 is held with fingers and the third male thread 63 is threadingly engaged with the third female thread 28 only by hand force without using the general purpose tool 120.

After the sealing abutting portion 65 has abutted on the front tapered surface 29, the general-purpose tool (not shown) is fitted into the fitting hole 64 so that the disengagement preventing member 60 is further screwed. As the result of the screwing with the general purpose tool, the sealing abutting portion 65 adheres to the front tapered surface 29 so as to airtightly bite into the front tapered surface 29 over a whole circumference. This airtightly seals a gap between the inner periphery of the joint body 16 and the outer periphery of the disengagement preventing member 60, thereby preventing the refrigerant in the flow path 17 from leaking outside through the insertion space 23. The assembly of the pipe joint Ja is thus completed.

The closing valve A to which the pipe joint Ja has thus assembled is attached to the outdoor unit B of the heat exchanger. Further, the outdoor unit B is filled with a refrigerant. However, since the flow path 17 is closed by the first valving element 20, there is no possibility that the refrigerant in the outdoor unit B would leak to the pipe joint Ja side. Even if the refrigerant flows through the first valving element 20 to the pipe joint Ja side, the refrigerant does riot leak through the pipe joint Ja to the atmosphere since the interior of the pipe joint Ja is airtightly sealed by the sealing action of the disengagement preventing member 60.

Even if the worker rotates by mistake the lock member 11 in the loosening direction (the direction in which the lock member 11 is disengaged from the joint body 16) under the condition that the disengagement preventing member 60 is assembled to the pipe joint Ja, the rear end of the clamping nut 36 (the rear surface of the smaller diameter portion 47) abuts against the stopper 62 of the disengagement preventing member 60 before the fixing member 66a detaches from the joint body 16, as shown in Fig. 2. Since this prevents further rearward movement of the clamping
nut 36, the clamping unit 36 (the clamping member 32) is prevented from disengaging from the joint body 16.

Further, there is a possibility that the disengagement preventing member 60 would rotate in the loosening direction by the friction between the clamping nut 36 and the stopper 62, when the clamping nut 36 is subjected to a strong force thereby to be rotated in the loosening direction under the condition that the lock member 11 abuts against the stopper 62 thereby to be prevented from disengagement. However, since the thread pitch of the first male and female threads 38 and 46 is larger than that of the third male and female threads 63 and 28, the disengagement preventing member 60 is locked so as to be unrotatable without co-rotation. This reliably prevents disengagement of the lock member 11 and the loosening of the disengagement preventing member 60.

### Connection of pipe P

The disengagement preventing member 60 is disengaged from the joint body 16 in advance in case that the pipe P is to be connected to the pipe joint Ja, as shown in Fig. 3. The worker grips the housing 15 with one hand and the pipe P with the other hand and inserts the pipe P into the insertion space 23. The front end of the pipe P is abutted against the front tapered surface 29 so that the pipe P is stopped in front. Subsequently, the hand is once removed from the housing 15 and then put to the clamping nut 36 so that the clamping nut 36 is rotated rightward to be threadingly engaged in the clamping direction (forward).

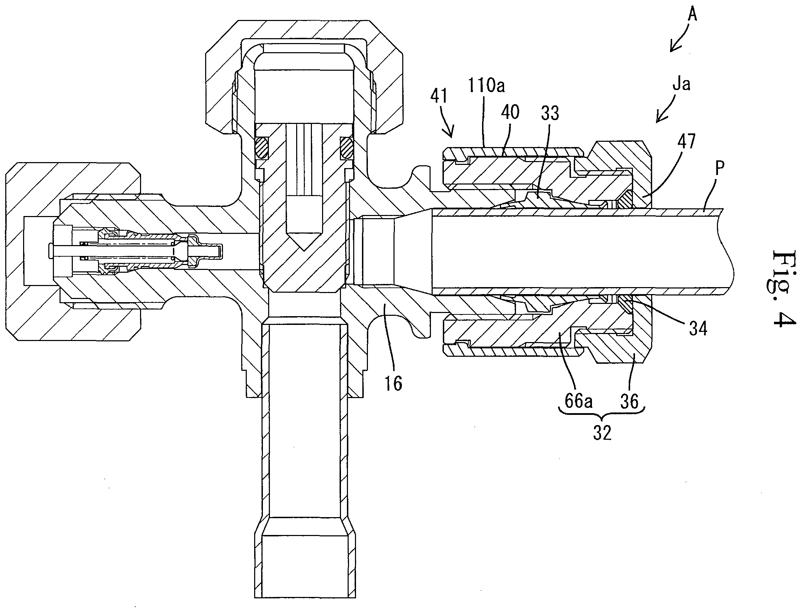

When the clamping nut 36 is threadingly engaged, the front-back dimension of the retaining groove 50 is reduced, and the elastic ring 34 is crushed back and forth between the cutout 45 and the smaller diameter portion 47 with the result that the inner diameter of the elastic ring 34 is reduced. As a result, the elastic ring 34 elastically abuts against the whole outer periphery of the pipe P. Frictional resistance due to the elastic abutment prevents the pipe P from movement relative to the lock member 11 in the front-back direction with the result that the pipe P is held while being prevented from disengagement from the joint body 16 as shown in Fig. 4.

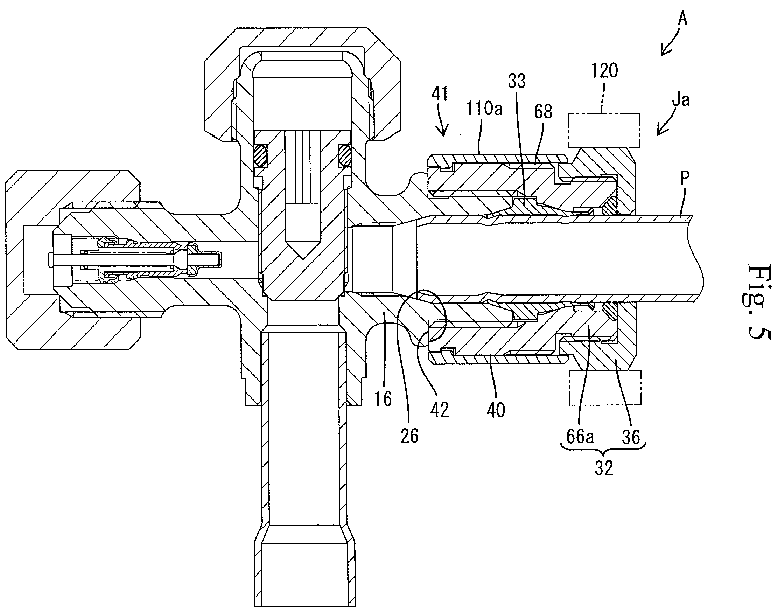

After the pipe P has been held, the general-purpose tools 120 are fitted with the fitting portion 48 of the clamping nut 36 and the outer surface of the housing 15 respectively, so that the clamping nut 36 is rotated rightward so as to be moved forward (in the clamping direction). In this case, since the smaller diameter portion 47 of the clamping nut 36 abuts against the rear end surface of the fixing member 66a, the fixing member 66a is rotated together with the clamping nut 36 even when a rotational force is directly imparted to the fixing member 66a. Thus, the clamping member 32 is screwed in the clamping direction. The screwing is continued till the abutting portion 42 butts the detection receiving portion 26 with the result that the clamping member 32 is prevented from threading engagement, as shown in Fig. 5.

In the process of threading engagement of the clamping member 32, the pressing surface 44 of the fixing member 66a abuts against the pressure receiving surface 55 of the ferrule 33 and thereafter, the pressing surface 44 axially presses the pressure receiving surface 55, with the result that the ferrule 33 is moved forward relative to the joint body 16. With this, the cylindrical clamping ng portion 52 is plastically deformed so that the diameter thereof is reduced by the inclination, while brought into sliding contact with the rear tapered surface 31.

When the cylindrical clamping portion 52 is deformed so that the diameter thereof is reduced, the first and second biting portions 56 and 57 bite into the outer periphery of the pipe P over the whole periphery like wedges, preventing axial relative displacement of the pipe P. As the result of the biting action, a gap between the inner periphery of the ferrule 33 and the outer periphery of the pipe P is airtightly sealed at two axially (in the lengthwise direction of the pipe P) spaced front and rear locations, and the pipe P is locked so as to be prevented from dropping off rearward.

Further, the front end of the outer periphery of the cylindrical clamping portion 52 airtightly adheres to the rear tapered surface 31 over a whole periphery while being plastically deformed, and the corner edge 27 of the joint body 16 airtightly adheres to the seal surface 54 of the ferrule 33 over the whole periphery while being plastically deformed (crushing deformation) . As the result of the adhering action, a gap between the outer periphery of the ferrule 33 and the inner periphery of the joint body 16 is airtightly sealed at two axially (in the lengthwise direction of the pipe P) spaced front and rear locations.

The aforementioned airtight biting and adherence indicate a normal sealed state (normal clamped state) in which the diameter-reducing unit 22 correctly connects the pipe joint Ja and the pipe P. In the normal sealed state, abutting portions are plastically deformed in the bitten and adhered portions. Accordingly, refrigerant leakage is reliably prevented between the pipe P and the pipe joint Ja.

Further, in the process of screwing the clamping member 32 in the clamping direction, the diameter-reducing unit 22 gets into the normal sealed state immediately before the abutting portion 42 reaches the detection receiving portion 26. At the time when the diameter-reducing unit 22 transitions from an incomplete sealed state (the state where the cylindrical clamping portion 52 has not airtightly bitten into the pipe P) to the normal sealed state, the worker cannot confirm by sight a normal clamped state in appearance. However, an operating manual determines that the clamping of the clamping member 32 (the clamping nut 36) should be continued with visual confirmation till the abutting portion 42 abuts against the detection receiving portion 26. Accordingly, when even a non-expert carries out the clamping work of the clamping member 32 according to the operating manual, the pipe P can be connected so that the normal sealed state is reached.

### Working and advantageous effect of embodiment 1

As described above, the pipe joint Ja (the closing valve A) of embodiment 1 includes the cylindrical fixing member 66a screwed into the joint, body 16, the ferrule 33 which, when the fixing member 66a is rotated in the clamping direction to be screwed, receives the axial pressing force from the fixing member 66a thereby to airtightly seal the gap between the inner periphery of the joint body 16 and the outer periphery of the pipe P, and the clamping nut 36 is rotated when the general-purpose tool 120 is fitted with the fitting portion 48 which is formed on the outer periphery thereof, thereby being capable of imparting a rotative force in the clamping direction to the fixing member.
Accordingly, when the general-purpose tool 120 is fitted with the fitting portion 48 to rotate the clamping nut 36 so that the rotative force in the clamping direction is imparted to the fixing member 66a from the clamping nut 36, the ferrule 33 is pressed by the fixing member 66a with the result that the gap between the inner periphery of the joint body 16 and the outer periphery of the pipe P is airtightly sealed, and the flow path 17 and the pipe P are connected together.

When a loosening rotative force is imparted by mistake to the clamping nut 36 after the pipe P has been connected to the pipe joint Ja, the clamping nut 36 is allowed to be rotated in the loosening direction. However, the fixing member 66a is not allowed to be rotated in the loosening direction since there is provided the locking unit 41 which employs the biting of metals. The biting structure of the metals functioning as the locking unit 41 includes a biting structure between the corner edge 27 of the joint body 16 and the seal surface 54 of the ferrule 33, a biting structure between the pressure receiving surface 55 of the ferrule 33 and the pressing surface 44 of the fixing member 66a, a biting structure between the front tapered surface 29 of the joint body 16 and the front end of the pipe P and a biting structure between the outer periphery of the pipe P and the first and second biting portions 56 and 57 of the ferrule 33. Accordingly, even when the rotative force imparted to the clamping nut 36 is
transmitted to the fixing member 66a, the abovementioned biting structures can reliably prevent the loosening of the fixing member 66a.

Moreover, since the outer periphery of the fixing member 66a is surrounded by the cover 110a capable of rotating idly, the cover 110a rotates idly even when the general-purpose tool 120 is fitted with the outer periphery of the cover 110a to impart the loosening rotative force to the cover 110a, and the rotative force of the general-purpose tool 120 is not transmitted to the fixing member 66a. The outer periphery of the fixing member 66a becomes exposed in case that the cover 110a is broken by the general-purpose tool 120 thereby to be removed from the fixing member 66a or the cover 110a is moved rearward to a large extent. However, the outer periphery of the fixing member 66a includes the completely circular circumferential surface region 40, the completely circular loosening male thread 68 and the completely circular first male thread 38. Accordingly, even when the general-purpose tool 120 is directly fitted with the outer periphery of the fixing member 66a so that the loosening rotative force is intended to be imparted to the fixing member 66a, the general-purpose tool 120 is slid. The fixing member 66a cannot be rotated by this slipping action of the completely circular shape, and in addition, by the locking unit 41 by the biting of the metals.

The pipe joint Ja (the closing valve A) of embodiment 1 includes the locking unit 41 which prevents rotation of the fixing member 66a in the loosening direction and retains the airtightly sealed state by the ferrule 33 when the rotative force is imparted to the fixing member 66a using the general-purpose tool 120. Accordingly, even when the rotative force is imparted to the fixing member 66a with the general-purpose tool 120 with the pipe P being connected to the pipe joint Ja, the locking unit 41 prevents the fixing member 66a from rotation in the loosening direction such that the ferrule 33 is released from the pressure against the ferrule 33. According to embodiment 1, the pipe joint Ja is superior in terms of the airtight sealing performance of the ferrule 33.

### Lock member 11 and disengagement of pipe P

The pipe joint Ja (the closing valve A) of embodiment 1 includes the means for detaching the lock member 11 and the pipe P from the pipe joint Ja (the joint body 16) thereby to release the pipe joint Ja from the airtightly sealed state by the ferrule 33. The means includes the loosening male thread 68 threaded in the direction opposed to the screw-in direction of the joint body 16 and the fixing member 66a and formed on the outer periphery of the fixing member 66a, the loosening tool 130 threadingly engageable with the loosening male thread 68, and the pressure receiving portion 39 which receives the loosening tool 130 and prevents further screw-in of the loosening tool 130 when the loosening tool 130 is screwed in the loosening male thread 68 and rotated in the direction opposed to the clamping direction of the fixing member 66a.

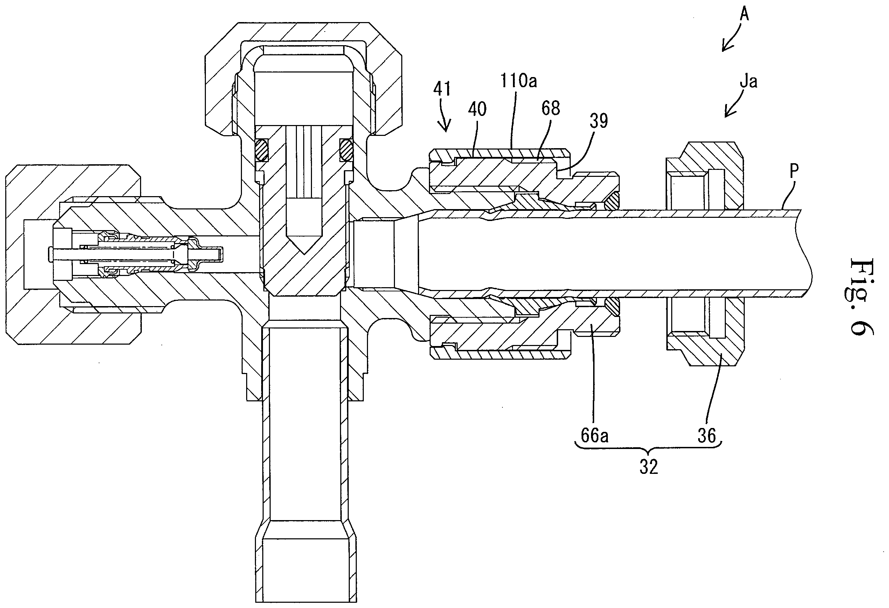

In the disengaging work, the clamping nut 36 is loosened with the general-purpose tool 120 thereby to be detached from the fixing member 66a and slid rearward, as shown in Fig. 6. The rotative force of the general-purpose tool 120 and the clamping
nut 36 is imparted to the fixing member 66a when the clamping nut 36 is loosened. However, the fixing member 66a is kept fixed to the joint body 16 but is not loosened by the locking unit 41. After the clamping nut 36 has been disengaged from the fixing member 66a, the cover 110a is slid to the exposing position so that the loosening male thread 68 is exposed and the loosening tool 130 is caused to coaxially stand by in the rear of the fixing member 66a, as shown in Fig. 7. In this case, since the loosening tool 130 is formed with the communication part 131, the loosening tool 130 is caused to come close to the pipe P from the vertical or horizontal direction, so that the pipe P is passed through the communication part 131. Accordingly, the pipe P need not be cut.

Subsequently, the loosening tool 130 is threadingly engaged with the loosening male thread 68 thereby to be moved forward while being rotated leftward (in the direction opposed to the rotational direction in clamping the fixing member 66a) so that the prevention abutting part 134 is abutted against the pressure receiving port ion 39 (see Fig. 8) . The rotation work of the loosening tool 130 may be carried out by gripping the loosening tool 130 directly with hand, or the general-purpose tool 120 may be fitted with the loosening fitting portion 132. When abutted against the pressure receiving portion 39, the loosening tool 130 is prevented from a further screwing operation, that is, rotation and axial (forward) movement relative to the fixing member 66a.

The general-purpose tool 120 is fitted with the loosening fitting portion 132 in this state so that the leftward rotative
force exceeding the rotation preventing force of the locking unit 41 is imparted to the loosening tool 130. The loosening tool 130 is then further rotated leftward (the direction in which the prevention abutting part 134 is pressed against the pressure receiving portion 39), and the fixing member 66a is rotated leftward (the loosening direction opposed to the clamping direction) together with the loosening tool 130. When the fixing member 66a is rotated in the loosening direction, the ferrule 33 is released from the pressure of the fixing member 66a, with the result that the pipe joint Ja and the pipe P are released from the airtightly sealed state. When the fixing member 66a is further rotated in the loosening direction by the loosening tool 130, the fixing member 66a, the ferrule 33, the loosening tool 130 and the pipe P are disengaged together from the joint body 16 as shown in Fig. 9. The cover 110a remains at the joint body 16 side.

According to the pipe joint Ja of embodiment 1, the airtightness by the ferrule 33 is not lost even when only the general-purpose tool 120 is used. When both the loosening tool 130 and the general-purpose tool 120 are concurrently used where necessary, the pipe joint Ja and the pipe P can be released from the airtightly sealed state by the ferrule 33.

Further, the loosening tool 130 in the pipe joint Ja of embodiment 1 is wholly comprised of a generally C-shaped single part. The loosening tool 130 has the inner periphery formed with the loosening female thread 133 threadingly engageable with the loosening male thread 68. Further, the loosening tool 130 has the communication part 131 which is formed by cutting out a circumferential part thereof so as to communicate between the outer periphery and the inner periphery. The cutout size is set to be larger than the outer diameter of the pipe P. According to this construction, when the loosening tool 130 is screwed into the loosening male thread 68, the pipe P is passed through the communication part 131 without being cut, so that the loosening tool 130 can be disposed coaxially with the loosening male thread 68.

Further, the cover 110a is attached to the outer periphery of the fixing member 66a so as to be movable between the protecting position where the cover 110a covers the loosening male thread 68 and the exposing position where the cover 110a exposes the loosening male thread 68. Accordingly, the loosening male thread 68 can be protected by the cover 110a when the loosening tool 130 is not screwed into the loosening male thread 68.

The pipe joint Ja (the closing valve A) includes the elastic ring 34 as the holding unit which is abutted against the pipe P inserted into the insertion space 23 thereby to be capable of holding the pipe P so that the pipe P is prevented from dropout. According to this construction, the pipe P inserted into the insertion space 23 can be held so as to be prevented from dropout. Accordingly, there is no possibility that the pipe P would drop out during a time period from insertion of the pipe P to start of the work to clamp the clamping member 32, with the result that the pipe joint Ja is superior in terms of the workability. Further, the elastic ring 34 is disposed at the position facing the insertion space 23 but not exposed to the outer surface of the pipe joint. Accordingly, the elastic ring 34 is protected from interference of foreign matter.

Further, the clamping member 32 includes the cylindrical fixing member 66a which is abutted against the ferrule 33 to impart the pressing force to the ferrule 33, and the clamping nut 36 which is screwed into the fixing member 66a to receive a screw-in force in the clamping direction, thereby imparting to the fixing member 66a the pressing force to the ferrule 33 side. The elastic ring 34 is disposed to be axially held between the fixing member 66a and the clamping nut 36. When screwed in the clamping direction, the elastic ring 34 is deformed so that the diameter thereof is reduced, thereby closely adhering to the outer periphery of the pipe P. Accordingly, when the elastic ring 34 is prevented from reduction in the diameter thereof before insertion of the pipe P, the frictional resistance is reduced in the insertion of the pipe with the result that the workability is improved. When the clamping nut 36 is screwed in the clamping direction after insertion of the pipe P, the pipe P can be held by the elastic ring 34 so as to be prevented from dropout.

The front tapered surface 29 is formed on the inner periphery of the joint body 16 in such a manner that the diameter thereof is reduced forward in the insertion direction of the pipe P. The distal end of the pipe P normally inserted into the insertion space 23 is abutted against the front tapered surface 29. The elastic ring 34 is disposed in the rear of the front tapered surface 29 in the insertion direction of the pipe P. According to this construction, the distal end of the pipe P inserted into the insertion space 23 is abutted against the front tapered surface 29, and the pipe P is held by the elastic ring 34 so as to be prevented from dropout. Since the position where the distal end of the pipe P is abutted against the front tapered surface 29 and the holding position of the elastic ring 34 are spaced in the insertion direction of the pipe P, the pipe P is maintained in a stable position without inclination relative to the axis line.

The closing valve A of embodiment 1 includes the disengagement preventing member 60 to prevent the clamping member 32 from disengaging from the joint body 16 when the clamping member 32 does not impart the pressing force to the ferrule 33. Accordingly, the clamping member 32 is prevented from disengagement from the joint body 16 even when the clamping member 32 is subjected to a loosening external force. Further, the cylindrical body 61 of the disengagement preventing member 60 is housed in the insertion space 23 into which the pipe P is inserted. Accordingly, foreign matter is prevented from invading the insertion space 23 with the result that the ferrule 33 is prevented from being damaged by the foreign matter. Further, since the disengagement preventing member 60 functions as the sealing member preventing the refrigerant in the flow path 17 from leaking to the outside through the insertion space 23, the number of parts is rendered smaller in this case as compared with the case where a sealing member is provided independent of the disengagement preventing member 60.

### Embodiment 2

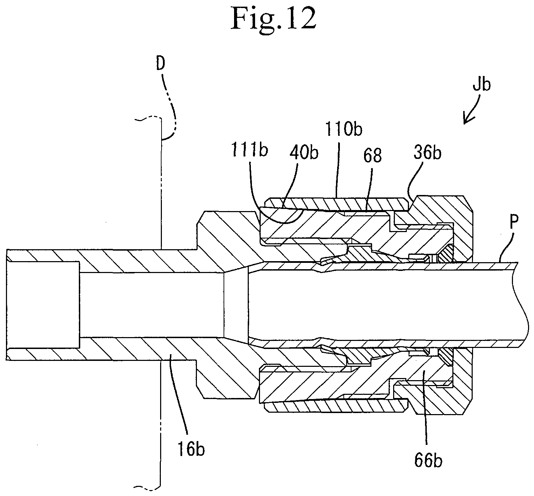

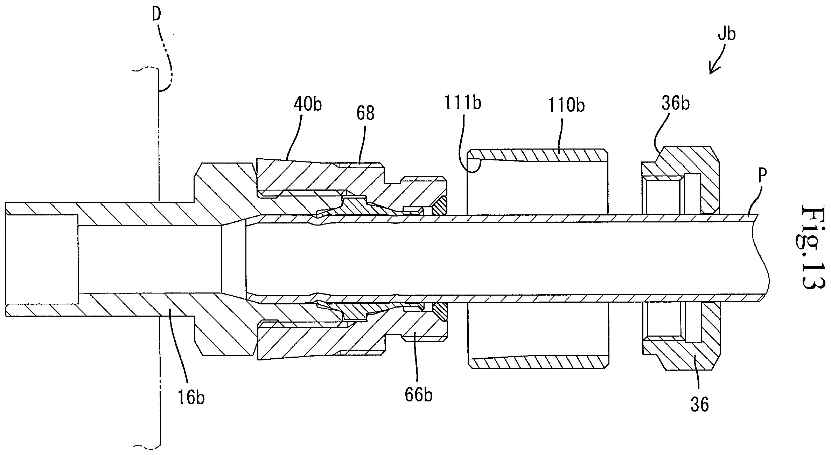

Figs. 12 and 13 show a pipe joint Jb of embodiment 2 in accordance with the invention. The pipe joint Jb of embodiment 2 is a single-function type joint unit mounted on the indoor unit D and is connected via the pipe P to the pipe joint Ja of the closing valve A of embodiment L A joint body 16b constituting the pipe joint Jb is connected to a refrigerant flow path of the indoor unit D. The fixing member 66b constituting the pipe joint Jb and the cover 110b differ from those in embodiment 1 respectively. The fixing member 66b in embodiment 2 serves to prevent the cover 110b from forward displacement relative to the fixing member 66b. For this purpose, the fixing member 66b is formed into an inverse tapered shape such that an outer diameter of the circumferential surface region 40b is gradually increased.

The cover 110b has a front end inner periphery formed with a tapered positioning surface 111b capable of face-to-face contact with the inversely tapered circumferential surface region 40b. Further, a stepped receiving portion 36b formed on the outer periphery of the clamping nut 36 serves as a unit which prevents the cover 110b from rearward displacement relative to the fixing member 66b. The stepped receiving portion 36b is in abutment with or in proximity to the cover 110b from behind thereby to be opposed to the cover 110b. When the clamping nut 36 is disengaged from the fixing member 66b in order that the pipe P may be disconnected from the pipe joint Jb, the cover 110h is displaced rearward relative to the fixing member 66b with the result that the loosening male thread 68 is exposed. The other construction, working and effect are identical with those in embodiment 1, and the description of the other construction, working and effect will be eliminated.

### Embodiment 3

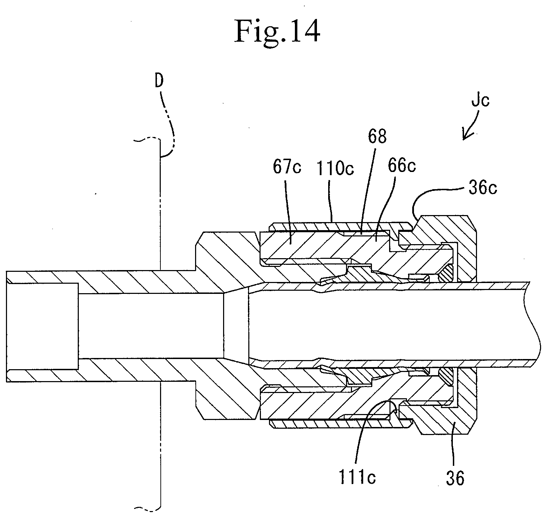

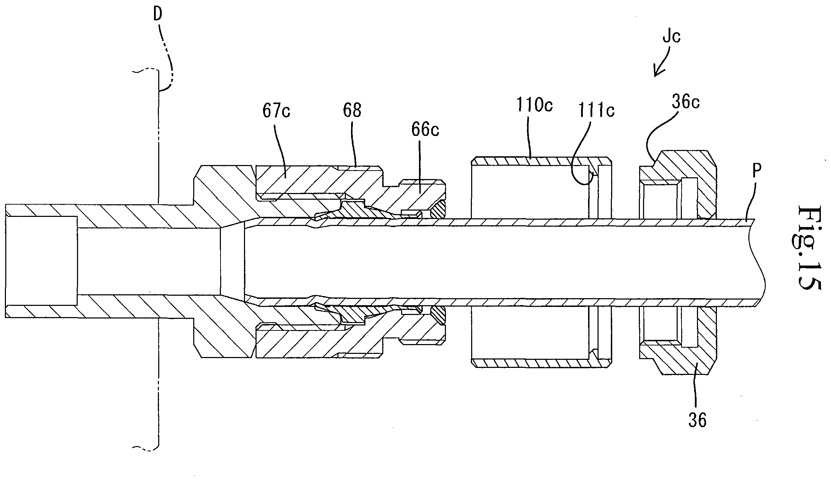

Figs. 14 and 15 show a pipe joint Jo of embodiment 3. The pipe joint Jc of embodiment 3 is also mounted on the indoor unit D as in embodiment 2. The fixing member 66c and the cover 110c both constituting the pipe joint Jc differ from those in embodiment 1. In embodiment 3, as a unit which positions the cover 110c in the front-back direction, there is provided the construction that a circumferential positioning rib 111c is held between a rear end surface of the larger diameter portion 67c of the fixing member 66c and the stepped receiving portion 36c of the clamping nut 36. When the clamping nut 36 is disengaged from the fixing member 66c, the cover 111c is rearwardly displaced relative to the fixing member 66c with the result that the loosening male thread 68 is exposed. The other construction, working and effect are identical with those in embodiment 1, and the description of the other construction, working and effect will be eliminated.

### Embodiment 4

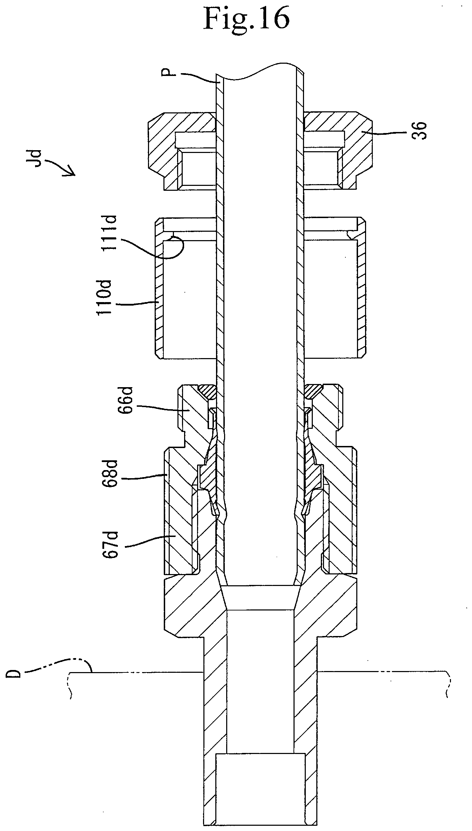

Fig. 16 shows a pipe joint Jd of embodiment 4. The pipe joint Jd of embodiment 4 is also mounted on the indoor unit D as embodiments 2 and 3. The fixing member 66d of the pipe joint Jd of embodiment 4 includes the loosening male thread 68d formed over a whole length of the outer periphery of the larger diameter portion 67d. The cover 110d in embodiment 4 is identical with the cover 110c in embodiment 3 and has a positioning rib 111d. The other construction, working and effect are identical with those in embodiment 1, and the description of the other construction, working and effect will be eliminated.

### Embodiment 5

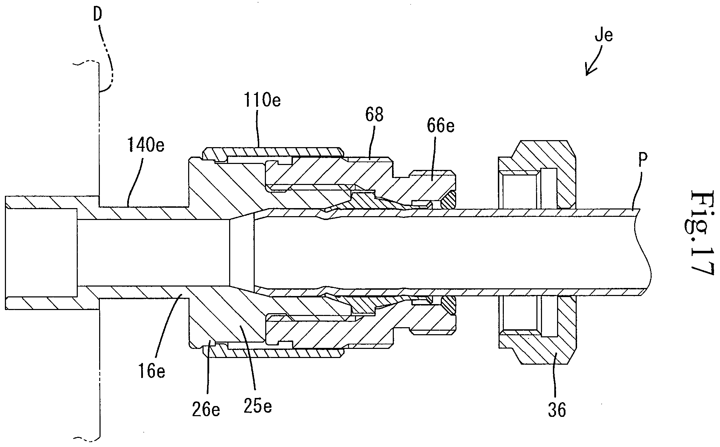

Fig. 17 shows a pipe joint Je of embodiment 5. The pipe joint Je of embodiment 5 is also mounted on the indoor unit D as embodiments 2 to 4. The fixing member 66e and the cover 110e of the pipe joint Je of embodiment 5 are identical with those in embodiment 1, but the joint body 16e differs from the joint body 16 in embodiment 1. A front stop portion 26e circumferentially protruding into a rib shape is formed on the outer peripheral front end of the enlarged diameter portion 25e of the joint body 16e, that is, at a position forward of the loosening male thread 68.

A region of the outer periphery of the joint body 16e forward of the front stop portion 26e (the enlarged diameter portion 25e) serves as a jig fitting portion 140e narrower than the enlarged diameter portion 25e. The jig fitting portion 140e has an outer periphery having known two parallel surfaces (not shown) to which a general-purpose tool (not shown) is fitted. When the clamping nut 36 is disengaged from the fixing member 66e, the cover 110e is displaced forward relative to the fixing member 66e so as to cover the enlarged diameter portion 25e. When the cover 110e is moved forward until abutting against the front stop portion 26e, the loosening male thread 68 covered by the cover 110e is exposed. The other construction, working and effect are identical with those in embodiment 1, and the description of the other construction, working and effect will be eliminated.

### Embodiment 6

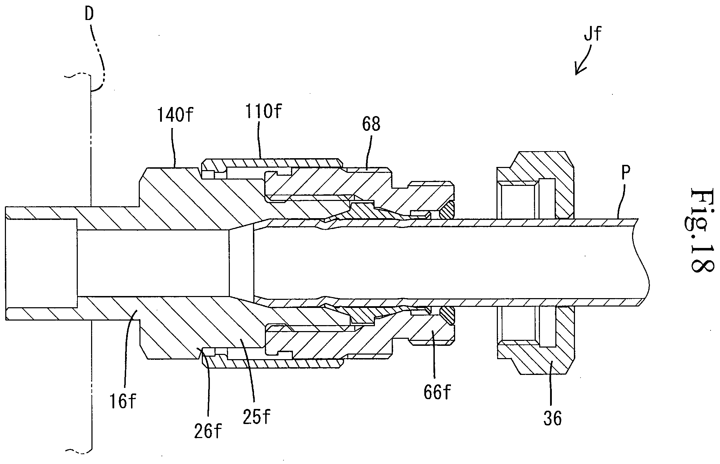

Fig. 18 shows a pipe joint Jf of embodiment 6. The pipe joint Jf of embodiment 6 is also mounted on the indoor unit D as embodiments 2 to 5. The fixing member 66f and the cover 110f of the pipe joint Jf of embodiment 6 are identical with those in embodiment 1 or 5, but the joint body 16f differs from the joint body in embodiment 1 or 5. A front stop portion 26f to prevent forward movement of the cover 110f is formed on the outer periphery of the enlarged diameter portion 25f of the joint body 16f of embodiment 6. The front stop portion 26f is formed at a substantially central position on the enlarged diameter portion 25f in the front-back direction, that is, at a position forward of the loosening male thread 68. The front stop portion 26f is constituted by forming the outer periphery of the enlarged diameter portion 25f into a stepped shape.

A region of the outer periphery of the enlarged diameter portion 25f forward of the front stop portion 26f serves as a jig fitting portion 140f to which a general-purpose jig is fitted and which has a regular hexagonal cross-section. When the clamping nut 36 is disengaged from the fixing member 66f, the cover 110f is displaced forward relative to the fixing member 66f so as to cover a region of the enlarged diameter portion 25f located in the rear of the front stop portion 26f. When the cover 110f is moved forward until abutting against the front end portion 26f, the loosening male thread 68 covered by the cover 110f is exposed. The other construction, working and effect are identical with those in embodiment 1, and the description of the other construction, working and effect will be eliminated.

### Embodiment 7

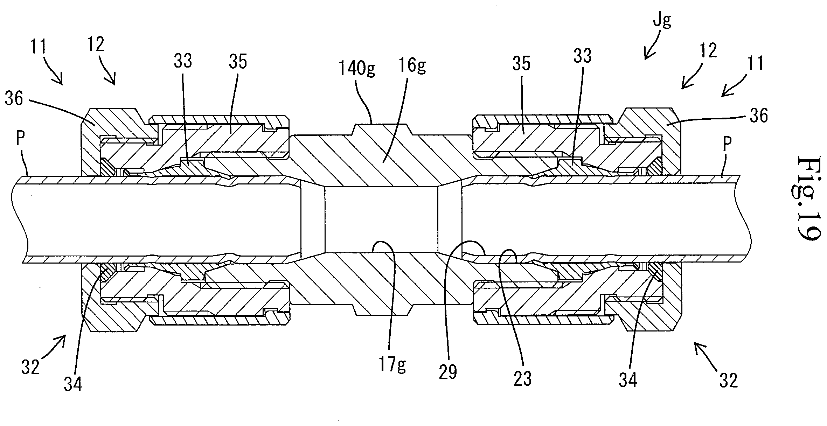

Fig. 19 shows a pipe joint Jg of embodiment 7. The pipe joint Jg of embodiment 7 is applied as a joint unit connecting between the pipe P connected to the outdoor unit B in embodiment 1 and the pipe P connected to the indoor unit D in each of embodiments 2 to 6. The pipe joint Jg of embodiment 7 has a joint body 16g having an interior serving as a through flow path 17g. The joint body 16g has an outer periphery formed with a jig fitting portion 140g to which a general-purpose jig (not shown) is fitted. The joint function units 12 having the same shape as those in embodiment 1 are assembled to an opening at the upstream end side and an opening at the downstream end side of the joint body 16g respectively. The pipe joint Jg of embodiment 7 comprises the joint body 16g and the paired joint function units 12. The pipes P are connected to the joint function units 12 respectively.

A pipe joint (not shown) as a modified form of the pipe joint Jg of embodiment 7 may have a plurality of branches obtained by dividing the flow path 17g of the joint body 16g. As a manner of connecting the pipes P in this case, for example, a single pipe P is connected at the outdoor unit B side and a plurality of pipes P is connected at the indoor unit D side, and the pipe joints can be used as joint units for branching pipes. The other construction, working and effect are identical with those in embodiment 1, and the description of the other construction, working and effect will be eliminated.

The invention should not be limited to the embodiments described above with reference to the drawings, but the following embodiments are included in the technical scope of the invention.
(1) Although the region of the outer periphery of the fixing member covered by the cover has the cross-section shape of a perfect circle in each of embodiments 1 to 7, the cross-sectional shape of this region may be non-circular.
(2) Although the cross-section of the outer periphery of the cover has the shape of a perfect circle in each of embodiments 1 to 7, the cross-sectional shape of the outer periphery of the cover may be non-circular.
(3) Although the cross-section of the inner periphery of the cover has the shape of a perfect circle in each of embodiments 1 to 7, the cross-sectional shape of the inner periphery of the cover may be non-circular.
(4) The cover employed in each of embodiments 1 to 7 may be applied to each of embodiments 8 to 21.
(5) Although the synthetic resin is used as the material of the cover in each of embodiments 1 to 7, the material of the cover may be a material other than the synthetic resin, for example, a metal or the like.
(6) Although the cover is used as the unit which covers the loosening male thread in each of embodiments 1 to 7, the loosening male thread may be covered with the clamping nut.
(7) Although the loosening male thread is covered with the cover when not in use, in each of embodiments 1 to 7, the loosening male thread may be normally exposed.
(8) Although the cover is axially movable between the position where the loosening male thread is covered and the position where the loosening male thread is exposed, in each of embodiments 1 to 7, the cover may not be axially movable.
(9) Although the biting structure by the metal ferrule is employed as the locking unit which prevents the fixing member from loosening, in each of embodiments 1 to 7, the fixing member and the joint body may be mechanically locked, the fixing member and the joint body may directly be plastically deformed by press fitting or biting, or another member having a larger frictional force may be interposed between the fixing member and the joint body.
(10) Although the cross-section of the clamping nut has the regular hexagonal shape in each of embodiments 1 to 7, the cross-section of the clamping nut may have a regular polygonal shape other than the regular hexagonal shape (an equilateral triangular shape) . In this case, the general-purpose tool used for the regular hexagonal fitting portion may be used as a means for tightening the clamping nut, or a dedicated tool according to the polygonal shape may be used.
(11) Although the cross-section of the clamping nut has the regular polygonal shape (the regular hexagonal shape) in each of embodiments 1 to 7, the cross-section of the clamping nut may have a non-circular shape such as an oval or elliptical shape.
(12) The six corner edges of the outer periphery of the clamping nut may be chamfered in each of embodiments 1 to 7.
(13) The outer periphery of the clamping nut may be formed so as not to cause a catch resulting in the loosening of the clamping nut (so that the corner edges of the regular hexagonal shape is chamfered substantially into an arc shape) in each of embodiments 1 to 7. In this case, the fixing member can also be prevented from loosening by preventing the clamping nut from loosening.
(14) Although the fitting portion is formed on the outer periphery of the clamping nut in each of embodiments 1 to 7, the fitting portion may be formed on a distal end of the clamping nut.
(15) In each of embodiments 1 to 7, the clamping nut is screwed into the fixing member, which is screwed into the joint body. However, the clamping nut may be directly screwed into the joint body. In this case, the clamping nut may not be screwed into the fixing member, and furthermore, the fixing member may not be screwed into the joint body.
(16) The joint body (the housing), the ferrule, the fixing member and the clamping nut are made of brass in each of embodiments 1 to 7. However, at least a part of these members may be made of a metal other than brass (aluminum or aluminum alloy, for example).
(17) Although the disengagement preventing member is made of brass in each of embodiments 1 to 7, the disengagement preventing member may be made of a metal other than brass (aluminum or aluminum alloy, for example) or a synthetic resin or may be a combination of a metal member and a synthetic resin member.
(18) The thread pitch of the second male thread and the second female thread is larger than the thread pitch of the first male thread and the first female thread in each of embodiments 1 to 7. However, the thread pitch relation may be reversed or both thread pitches may be the same.
(19) The thread pitch of the first male thread and the first female thread is larger than the thread pitch of the third male thread and the third female thread in each of embodiments 1 to 7. However, the thread pitch relation may be reversed or both thread pitches may be the same.
(20) The thread pitch of the second male thread and the second female thread is larger than the thread pitch of the third male thread and the third female thread in each of embodiments 1 to 7. However, the thread pitch relation may be reversed or both thread pitches may be the same.
(21) Embodiment 1 describes the case where the joint function unit and the valve function unit are integrated so as to function as the closing valve for the outdoor unit. However, the joint function unit may be separated from the valve function unit to function as a single-function pipe joint. In this case, the joint function unit can be used as the pipe joint at the indoor unit side.
(22) The pipe joint for the indoor unit is described in each of embodiments 2 to 6. The structure of the fixing member and the cover in each of embodiments 2 to 6 can be applied to the pipe joint for the outdoor unit in embodiment 1 and the relaying pipe joint in embodiment 7.
(23) Although the disengagement preventing member is mounted to the joint body by screwing in embodiment 1, the disengagement preventing member may be elastically caught in a groove or a recess in the inner periphery of the joint body.
(24) Although the disengagement preventing member also has the function of the sealing member in embodiment 1, the disengagement preventing member may be a dedicated part separate from the sealing member.
(25) Although the disengagement preventing member is mounted to the joint body at the inner peripheral side of the clamping member (in the insertion space for the pipe) in embodiment 1, the disengagement preventing member may be mounted to the outer periphery of the cylindrical portion by covering the clamping member.
(26) Although the stopper of the disengagement preventing member is formed into the shape of a flange continuous over a whole circumference in embodiment 1, stoppers may be disposed at a plurality of circumferentially spaced positions respectively.
(27) Although the clamping member includes two parts, that is, the clamping nut and the fixing member in embodiment 1, the clamping member may include a single part.
(28) The clamping member includes two parts of the clamping nut and the fixing member and the tool is fitted with the clamping nut to tighten the clamping nut when the ferrule is elastically deformed into a seal state, in embodiment 1. The tool may be fitted with the fixing member to tighten the fixing member, instead. In this case, the clamping nut may have only the function of diametrically reducing the holding unit (elastic ring) without the tightening function. Further, when the clamping nut is not provided with the tightening function, the outer configuration of the clamping nut should not be limited to the regular hexagonal shape but may be formed into a shape such that the clamping nut can be manually rotated easily, such as knurled or protrusion-like knob.
(29) Although the sealing member is made of brass in embodiment 1, the sealing member may be made of a metal other than brass (aluminum or aluminum alloy, for example) or a synthetic resin or may be a combination of a metal member and a synthetic resin member.
(30) Embodiment 1 describes the disengagement preventing member 60 preventing the clamping member from disengaging from the joint body under the condition where no pressing force is applied to the ferrule by the clamping member. This construction can be applied not only to a pipe joint for a closing valve mounted on an outdoor unit but also to a single-function (having no valve function) pipe joint mounted to an indoor unit or a pipe joint to relay a pipe connected to an outdoor unit and a pipe connected to an indoor unit. Further, as a manner of connecting the pipes P in the application as the relaying joint unit, for example, a single pipe P may be connected at the outdoor unit side and a plurality of pipes P may be connected at the indoor unit side, and the pipe joints may be used as joint units for branching pipes .

### Explanation of Reference Symbols

A ··· closing valve;
B ··· outdoor unit (heat exchanging unit);
C, Ja, Jb, Jc, Jd, Je, Jf, Jg, Jh, Jk, Jm and Jr ··· pipe joint;
D ··· indoor unit (heat exchanging unit);
P ··· pipe;
15 ··· housing;
16, 16b, 16e, 16f, 16g and 95 ··· joint body;
17 and 17g ··· flow path;
20 ··· first valving element (valving element);
21 ··· second valving element (valving element);
23 ··· insertion space;
32, 80 and 84 ··· clamping member;
33 ··· ferrule;
35, 66a, 66b, 66c, 66d, 66e, 66f, 81, 85, 93 and 98 ··· fixing member;
66, 70, 74, 81, 85 and 93 ··· fixing member;
36, 82, 86, 88 and 94 ··· clamping nut;
39 ··· pressure receiving portion (screw-in preventing portion);
41 ··· locking unit;
48 ··· fitting portion;
60 ··· disengagement preventing member (sealing member);
61 ··· cylindrical body;
62 ··· stopper;
68 and 68d ··· loosening male thread (loosening thread);
110a, 110b, 110c, 110d, 110e and 110f ··· cover (locking unit);
120 ··· general-purpose tool;
130 ··· loosening tool;
131 ··· communication part;
133 ··· loosening female thread;
134 ··· prevention abutting part (screw-in preventing portion); and
370 and 380 ··· disengagement preventing member.

## Claims

1. A pipe joint which includes:
a cylindrical joint body (16, 16b, 16e, 16f, 16g, 95, 276) into which a pipe (P) is inserted and which is configured to be capable of communicating with a refrigerant flow path (17, 17g) of a heat exchanging unit (B);
a cylindrical clamping member (32, 80, 84) mounted to the joint body (16, 16b, 16e, 16f, 16g, 95, 276) by screwing; and
a ferrule (33) receiving an axial pressing force from the clamping member (32, 80, 84) screwed in a clamping direction, thereby airtightly sealing a gap between an inner periphery of the joint body (16, 16b, 16e, 16f, 16g, 95, 276) and an outer periphery of the pipe (P),
a cylindrical fixing member (35, 66a, 66b, 66c, 66d, 66e, 66f, 81, 85, 93, 98, 271) constructing the clamping member (32, 80, 84) and abutting against the ferrule (33) to impart a pressing force to the ferrule (33);
a clamping nut (36, 70, 74, 82, 86, 88, 94, 272) constructing the clamping member (32, 80, 84) and having an outer periphery formed with a non-circular fitting portion (48), the clamping nut (36, 70, 74, 82, 86, 88, 94, 272) receiving a screw-in force in the clamping direction, thereby imparting to the fixing member (35, 66a, 66b, 66c, 66d, 66e 66f, 81, 85, 93, 98, 271) a pressing force to the ferrule (33) side; and
a locking unit (41) preventing the fixing member (35, 66a, 66b, 66c, 66d, 66e, 66f, 81, 85, 93, 98, 271) from displacement in a direction such that the ferrule (33) is released from the pressing force applied by the fixing member (35, 66a, 66b, 66c, 66d, 66e, 66f, 81, 85, 93, 98, 271),
**characterized in that**
the locking unit (41) includes a cover (110a, 110b, 110c, 110d, 110e, 110f) which is configured to surround the fixing member (35, 66a, 66b, 66c, 66d, 66e, 66f, 81, 85, 93, 98, 271) and is rotatable relative to the fixing member (35, 66a, 66b, 66c, 66d, 66e, 66f, 81, 85, 93, 98, 271).

2. The pipe joint according to claim 1, wherein the fixing member (35, 66a, 66b, 66c, 66d, 66e, 66f, 81, 85, 93, 98, 271) has a cross-section surface shaped into a perfect circle, whereby the locking unit (41) is configured.

3. The pipe joint according to claim 1 or 2, wherein the locking unit (41) includes a biting structure of metals between the joint body (16, 16b, 16e, 16f, 16g, 95, 276) and the ferrule (33) and a biting structure of metals between the ferrule (33) and the fixing member (35, 66a, 66b, 66c, 66d, 66e, 66f, 81, 85, 93, 98, 271).

4. The pipe joint according to claim 3 wherein the locking unit (41) includes a biting structure of metals between the joint body (16, 16b, 16e, 16f, 16g, 95, 276) and the pipe (P) and a biting structure of metals between the pipe (P) and the ferrule (33).

5. The pipe joint according to claim 1, further **characterized by** a disengagement preventing member (60, 370, 380) which prevents the clamping member (32, 80, 84) from disengaging from the joint body (16, 16b, 16e, 16f, 16g, 95, 276) when the clamping member (32, 80, 84) applies no pressing force to the ferrule (33).

6. The pipe joint according to claim 5, further **characterized by** an insertion space (23) into which the pipe (P) is inserted, wherein the disengagement preventing member (60, 370, 380) includes:
a cylindrical body (61) housed in the insertion space (23) and mounted to the joint body (16, 16b, 16e, 16f, 16g, 95, 276); and
a stopper (62) configured to come close to the clamping member (32, 80, 84) thereby to be capable of opposing or abutting against the clamping member (32, 80, 84).

7. The pipe joint according to claim 6, wherein the cylindrical body (61) is configured to be mounted to the joint body (16, 16b, 16e, 16f, 16g, 95, 276) by screwing, and the cylindrical body (61) and the joint body (16, 16b, 16e, 16f, 16g, 95, 276) have respective threaded portions with a thread pitch and the clamping member (32, 80, 84) and the joint body (16, 16b, 16e, 16f, 16g, 95, 276) have respective threaded portions with a thread pitch differing from the thread pitch of the cylindrical body (61) and the joint body (16, 16b, 16e, 16f, 16g, 95, 276).

8. The pipe joint according to any one of claims 5 to 7, further **characterized by** an insertion space (23) into which the pipe (P) is inserted, wherein the disengagement preventing member (60, 370, 380) functions as a sealing member (60, 370, 380) which prevents a refrigerant in the flow path (17, 17g) from leaking outside through the insertion space (23).

9. A closing valve comprising:
the pipe joint (C, Ja, Jb, Jc, Jd, Je, Jf, J Jr) specified in any one of claims 1 to 8;
a housing (15) having the flow path (17, 17g) and mounted to the heat exchanging unit (B); and
a valving element (20, 21) opening and closing the flow path (17, 17g), wherein the housing (15) is formed with the joint body (16, 16b, 16e, 16f, 16g, 95, 276).

## Patentansprüche

1. Rohrverbindung, die umfasst:
einen zylindrischen Verbindungskörper (16, 16b, 16e, 16f, 16g, 95, 276), in den ein Rohr (P) eingesetzt ist, und der derart aufgebaut ist, dass er fähig ist, mit einem Kältemittelströmungsweg (17, 17g) einer Wärmeaustauscheinheit (B) in Verbindung zu stehen;
ein zylindrisches Spannelement (32, 80, 84), das durch Schrauben an dem Verbindungskörper (16, 16b, 16e, 16f, 16g, 95, 276) montiert ist; und
eine Muffe (33), die eine axiale Druckkraft von dem Spannelement (32, 80, 84) empfängt, das in einer Spannrichtung geschraubt wird, wodurch eine Lücke zwischen einem Innenumfang des Verbindungskörpers (16, 16b, 16e, 16f, 16g, 95, 276) und einem Außenumfang des Rohrs (P) luftdicht abgedichtet wird,
ein zylindrisches Fixierungselement (35, 66a, 66b, 66c, 66d, 66e, 66f, 81, 85, 93, 98, 271), welches das Spannelement (32, 80, 84) aufbaut und gegen die Muffe (33) anliegt, um der Muffe (33) eine Druckkraft zu verleihen;
eine Spannmutter (36, 70, 74, 82, 86, 88, 94, 272), die das Spannelement (32, 80, 84) aufbaut und einen Außenumfang hat, der mit einem nicht kreisförmigen Montageabschnitt (48) ausgebildet ist, wobei die Spannmutter (36, 70, 74, 82, 86, 88, 94, 272) eine Einschraubkraft in der Spannrichtung empfängt, wodurch dem Fixierungselement (35, 66a, 66b, 66c, 66d, 66e, 66f, 81, 85, 93, 98, 271) eine Druckkraft zu der Seite der Muffe (33) verliehen wird; und
eine Sperreinheit (41), die verhindert, dass das Fixierungselement (35, 66a, 66b, 66c, 66d, 66e, 66f, 81, 85, 93, 98, 271) sich in einer Richtung verschiebt, so dass die Muffe (33) aus der Druckkraft, die auf das Fixierungselement (35, 66a, 66b, 66c, 66d, 66e, 66f, 81, 85, 93, 98, 271) angewendet wird, gelöst wird,
**dadurch gekennzeichnet, dass**
die Sperreinheit (41) eine Abdeckung (110a, 110b, 110c, 110d, 110e, 110f) umfasst, die derart aufgebaut ist, dass sie das Fixierungselement (35, 66a, 66b, 66c, 66d, 66e, 66f, 81, 85, 93, 98, 271) umgibt und relativ zu dem Fixierungselement (35, 66a, 66b, 66c, 66d, 66e, 66f, 81, 85, 93, 98, 271) drehbar ist.

2. Rohrverbindung nach Anspruch 1, wobei das Fixierungselement (35, 66a, 66b, 66c, 66d, 66e, 66f, 81, 85, 93, 98, 271) eine Querschnittoberfläche hat, die zu einem perfekten Kreis geformt ist, wodurch die Sperreinheit (41) aufgebaut wird.

3. Rohrverbindung nach Anspruch 1 oder 2, wobei die Sperreinheit (41) eine Greifstruktur aus Metallen zwischen dem Verbindungskörper (16, 16b, 16e, 16f, 16g, 95, 276) und der Muffe (33) und eine Greifstruktur aus Metallen zwischen der Muffe (33) und dem Fixierungselement (35, 66a, 66b, 66c, 66d, 66e, 66f, 81, 85, 93, 98, 271) umfasst.

4. Rohrverbindung nach Anspruch 3, wobei die Sperreinheit (41) eine Greifstruktur aus Metallen zwischen dem Verbindungskörper (16, 16b, 16e, 16f, 16g, 95, 276) und dem Rohr (P) und eine Greifstruktur aus Metallen zwischen dem Rohr (P) und der Muffe (33) umfasst.

5. Rohrverbindung nach Anspruch 1, ferner durch ein Löseschutzelement (60, 370, 380) gekennzeichnet, das verhindert, dass das Spannelement (32, 80, 84) sich von dem Verbindungskörper (16, 16b, 16e, 16f, 16g, 95, 276) löst, wenn das Spannelement (32, 80, 84) keine Druckkraft auf die Muffe (33) ausübt.

6. Rohrverbindung nach Anspruch 5, die ferner durch einen Einsetzraum (23) gekennzeichnet ist, in den das Rohr (P) eingesetzt wird, wobei das Löseschutzelement (60, 370, 380) umfasst:
einen zylindrischen Körper (61), der in dem Einsetzraum (23) untergebraucht ist und an den Verbindungskörper (16, 16b, 16e, 16f, 16g, 95, 276) montiert ist; und
einen Anschlag (62), der aufgebaut ist, um nahe an das Spannelement (32, 80, 84) zu kommen, um dadurch fähig zu sein, sich dem Spannelement (32, 80, 84) entgegenzustellen oder daran anzuliegen.

7. Rohrverbindung nach Anspruch 6, wobei der zylindrische Körper (61) aufgebaut ist, um durch Schrauben an den Verbindungskörper (16, 16b, 16e, 16f, 16g, 95, 276) montiert zu werden, und wobei der zylindrische Körper (61) und der Verbindungskörper (16, 16b, 16e, 16f, 16g, 95, 276) jeweilige Gewindeabschnitte mit einem Gewindegang haben und das Spannelement (32, 80, 84) und der Verbindungskörper (16, 16b, 16e, 16f, 16g, 95, 276) jeweilige Gewindeabschnitte mit einem Gewindegang haben, der sich von dem Gewindegang des zylindrischen Körpers (61) und des Verbindungskörpers (16, 16b, 16e, 16f, 16g, 95, 276) unterscheidet.

8. Rohrverbindung nach einem der Ansprüche 5 bis 7, ferner durch einen Einsetzraum (23) gekennzeichnet, in den das Rohr (P) eingesetzt wird, wobei das Löseschutzelement (60, 370, 380) als ein Dichtungselement (60, 370, 380) wirkt, das verhindert, dass ein Kältemittel in dem Strömungsweg (17, 17g) durch den Einsetzraum (23) nach außen ausläuft.

9. Schließventil, das umfasst:
die Rohrverbindung (C, Ja, Jb, Jc, Jd, Je, Jf, J, Jr) nach einem der Ansprüche 1 bis 8;
ein Gehäuse (15) mit dem Strömungsweg (17, 17g), das an die Wärmeaustauscheinheit (B) montiert ist; und
ein Ventileinschraubelement (20, 21), das den Strömungsweg (17, 17g) öffnet und schließt, wobei das Gehäuse (15) mit dem Verbindungskörper (16, 16b, 16e, 16f, 16g, 95, 276) ausgebildet ist.

## Revendications

1. Joint de tuyau qui inclut :
un corps de joint cylindrique (16, 16b, 16e, 16f, 16g, 95, 276) dans lequel un tuyau (P) est inséré et qui est configuré pour être capable de communiquer avec un trajet d'écoulement de réfrigérant (17, 17g) d'un module échangeur de chaleur (B) ;
un élément de serrage cylindrique (32, 80, 84) monté sur le corps de joint (16, 16b, 16e, 16f, 16g, 95, 276) par vissage; et
une bague (33) recevant une force de pression axiale de l'élément de serrage (32, 80, 84) vissé dans une direction de serrage, scellant de ce fait de manière étanche à l'air un espace entre une périphérie interne du corps de joint (16, 16b, 16e, 16f, 16g, 95, 276) et une périphérie externe du tuyau (P),
un élément de fixation cylindrique (35, 66a, 66b, 66c, 66d, 66e, 66f, 81, 85, 93, 98, 271) construisant l'élément de serrage (32, 80, 84) et butant contre la bague (33) pour conférer une force de pression à la bague (33) ;
un écrou de serrage (36, 70, 74, 82, 86, 88, 94, 272) construisant l'élément de serrage (32, 80, 84) et ayant une périphérie externe formée d'une portion d'ajustement non circulaire (48), l'écrou de serrage (36, 70, 74, 82, 86, 88, 94, 272) recevant une force de vissage dans la direction de serrage, conférant de ce fait à l'élément de fixation (35, 66a, 66b, 66c, 66d, 66e, 66f, 81, 85, 93, 98, 271) une force de pression sur le côté de la bague (33) ; et
un module de verrouillage (41) empêchant l'élément de fixation (35, 66a, 66b, 66c, 66d, 66e, 66f, 81, 85, 93, 98, 271) de se déplacer dans une direction telle que la bague (33) est libérée de la force de pression appliquée par l'élément de fixation (35, 66a, 66b, 66c, 66d, 66e, 66f, 81, 85, 93, 98, 271),
**caractérisé en ce que**
le module de verrouillage (41) inclut un recouvrement (110a, 110b, 110c, 110d, 110e, 110f) qui est configuré pour entourer l'élément de fixation (35, 66a, 66b, 66c, 66d, 66e, 66f, 81, 85, 93, 98, 271) et est rotatif par rapport à l'élément de fixation (35, 66a, 66b, 66c, 66d, 66e, 66f, 81, 85, 93, 98, 271).

2. Joint de tuyau selon la revendication 1, dans lequel l'élément de fixation (35, 66a, 66b, 66c, 66d, 66e, 66f, 81, 85, 93, 98, 271) a une surface en coupe transversale formée en un cercle parfait, par laquelle le module de verrouillage (41) est configuré.

3. Joint de tuyau selon la revendication 1 ou 2, dans lequel le module de verrouillage (41) inclut une structure de mordant de métaux entre le corps de joint (16, 16b, 16e, 16f, 16g, 95, 276) et la bague (33), et une structure de mordant de métaux entre la bague (33) et l'élément de fixation (35, 66a, 66b, 66c, 66d, 66e, 66f, 81, 85, 93, 98, 271).

4. Joint de tuyau selon la revendication 3, dans lequel le module de verrouillage (41) inclut une structure de mordant de métaux entre le corps de joint (16, 16b, 16e, 16f, 16g, 95, 276) et le tuyau (P), et une structure de mordant de métaux entre le tuyau (P) et la bague (33).

5. Joint de tuyau selon la revendication 1, **caractérisé en outre par** un élément de prévention de désengagement (60, 370, 380) qui empêche l'élément de serrage (32, 80, 84) de se désengager du corps de joint (16, 16b, 16e, 16f, 16g, 95, 276) lorsque l'élément de serrage (32, 80, 84) n'applique aucune force de pression sur la bague (33).

6. Joint de tuyau selon la revendication 5, **caractérisé en outre par** un espace d'insertion (23) dans lequel le tuyau (P) est inséré, dans lequel l'élément de prévention de désengagement (60, 370, 380) inclut :
un corps cylindrique (61) hébergé dans l'espace d'insertion (23) et monté sur le corps de joint (16, 16b, 16e, 16f, 16g, 95, 276) ; et
une butée (62) configurée pour s'approcher de l'élément de serrage (32, 80, 84) pour être capable de ce fait de s'opposer à ou buter contre l'élément de serrage (32, 80, 84).

7. Joint de tuyau selon la revendication 6, dans lequel le corps cylindrique (61) est configuré pour être monté sur le corps de joint (16, 16b, 16e, 16f, 16g, 95, 276) par vissage, et le corps cylindrique (61) et le corps de joint (16, 16b, 16e, 16f, 16g, 95, 276) ont des portions filetées respectives avec un pas de filet, et l'élément de serrage (32, 80, 84) et le corps de joint (16, 16b, 16e, 16f, 16g, 276) ont des portions filetées respectives avec un pas de filet différant du pas de filet du corps cylindrique (61) et du corps de joint (16, 16b, 16e, 16f, 16g, 95, 276).

8. Joint de tuyau selon l'une quelconque des revendications 5 à 7, **caractérisé en outre par** un espace d'insertion (23) dans lequel le tuyau (P) est inséré, dans lequel l'élément de prévention de désengagement (60, 370, 380) fonctionne comme un élément d'étanchéité (60, 370, 380) qui empêche un réfrigérant dans le trajet d'écoulement (17, 17g) de fuir vers l'extérieur à travers l'espace d'insertion (23).

9. Soupape d'arrêt comprenant :
le joint de tuyau (C, Ja, Jb, Jc, Jd, Je, Jf, J Jr) spécifié dans l'une quelconque des revendications 1 à 8 ;
un logement (15) ayant le trajet d'écoulement (17, 17g) et monté sur le module échangeur de chaleur (B) ; et
un élément de soupape (20, 21) ouvrant et fermant le trajet d'écoulement (17, 17g), dans laquelle le logement (15) est formé du corps de joint (16, 16b, 16e, 16f, 16g, 95, 276).
